# EUROPEAN PATENT SPECIFICATION

(11) **EP 3 104 093 B1**
(45) Date of publication and mention of the grant of the patent: **06.06.2018**
(21) Application number: 16174135.0
(22) Date of filing: 13.06.2016
(51) Int. Cl.: F24F 11/02, F24D 3/10, F24F 11/06, F16K 11/02, F16K 11/085

(54) **IMPROVED HYDRAULIC DISTRIBUTOR**
VERBESSERTER HYDRAULISCHER VERTEILER
DISTRIBUTEUR HYDRAULIQUE AMÉLIORÉ

(30) Priority: 11.06.2015 IT UB20151103
(43) Date of publication of application: 14.12.2016
(73) Proprietor: Mut Meccanica Tovo S.p.A., 36075 Montecchio Maggiore (VI) (IT)
(72) Inventor: CATTELAN, Gabriele, 36100 VICENZA (IT); FACCHIN, Roberto, 36078 VALDAGNO (VI) (IT)
(74) Representative: Bonini, Ercole

(56) References cited:
- EP-A2- 0 243 141
- DE-A1- 3 118 471
- DE-A1- 3 313 352
- GB-A- 1 229 162
- US-A- 4 147 182

## Description

The invention regards an improved hydraulic distributor, particularly adapted to be used in heating and/or conditioning systems.

In particular, the hydraulic distributor of the invention is particularly adapted for use in heating and/or conditioning systems of the hybrid type comprising at least a heat pump and at least one heat generator.

It is known that heat pumps are machines that are currently commonly used for obtaining systems for heating and/or conditioning environments due to their ease of installation and high efficiency coefficient.

A drawback related to the use of these machines first and foremost lies in the limited power that they are capable of generating.

In addition, a further drawback of the heat pumps lies in the fact that their operating efficiency reduces as the external temperature drops and thus the power that are capable of transferring to the system reduces proportionally.

Substantially, the use of heat pumps reveals to be an efficient technology when the temperatures of the external air are medium-high but not sufficiently convenient both from an economic and energetic point of view when the temperatures of the external are air medium-low.

The so-called "hybrid" systems that provide for combining one or more heat pumps with one or more heat generators, such as for example condensing boilers, have been made and are currently commonly used with the aim of overcoming the aforementioned drawbacks.

In these systems, heat generators intervene when the power supplied by the heat pumps is no longer sufficient to meet the heat demand of the system or when the external air temperature conditions cause the efficiency of the heat pumps to drop beneath a preset minimum value.

In the aforementioned hybrid systems there are identified three operating conditions that are automatically managed by control means as a function of the temperature of the external environment and the temperature meant to be maintained in the environment to be heated and/or conditioned and they comprise:
- a first condition in which only the heat pump operates;
- a second condition in which only the heat generator operates;
- a third condition in which both the heat pump and the heat generator operate and this occurs when the operation of the heat pump alone is not enough to maintain the environment to be heated or conditioned at the desired conditions.

The aforementioned hybrid systems reveal some advantages with respect to the known systems, especially given that they reveal to be more efficient than the latter.

In addition, hybrid systems also pollute less than the known systems given that they use heat generators or boilers that may have less power given that they are solely required to respond to peak demands.

In the hybrid systems of the known type, the operation in the three modes outlined beforehand is guaranteed by the presence in the system of two three-way diverter valves which, depending on the position at which they are arranged, allow the operation of one heat pump alone, or the generator alone, or both at the same time.

Patent document EP 0 243 141 A2 which describes a hydraulic distributor having four flow mouths and a shutter, the latter being provided with selection means which allow obtaining different fluid paths through the flow mouths, is known to the filing party.

The aforementioned hydraulic distributor reveals the drawback lying in the fact that the shutter allows only one position in which the flow develops through two of the four flow ways it is provided with. This makes the distributor unsuitable for use in hybrid systems that instead require that, by displacing the shutter, the distributor be capable of creating three different flow paths, each through two flow ways.

The applicant is not aware of any hybrid systems provided with a single switch valve.

Thus, the object of the invention is to provide a hydraulic distributor having a single distributor body with a single shutter adapted to be arranged in three different operating positions, each adapted to obtain a different flow condition through the ways present in the distributor body.

It is another object to provide a hydraulic system comprising a heat pump and a heat generator capable of operating either the heat pump alone, or the heat generator alone or both in a hybrid fashion, using a single hydraulic distributor of the invention.

The aforementioned objects are attained by a hydraulic distributor according to the main claim to which reference is made.

Other characteristics of the hydraulic distributor and the hydraulic system using it are described in the dependent claims.

Advantageously, all assembly, maintenance and adjustment operations become easier given that the system uses only one distributor.

The objects and advantages listed above shall be outlined further hereinafter in the description of preferred embodiments of the distributor of the invention and the systems that use it, provided hereinafter by way of non-limiting example with reference to the attached drawings, wherein:
- fig. 1 represents the distributor of the invention with the flow selection means arranged in a first operating position defining a first flow path;
- fig. 2 represents another view of the distributor of fig. 1;
- fig. 3 represents two different views of the flow selection means of the distributor of figs. 1 and 2;
- fig. 4 represents the distributor of fig. 1 with the flow selection means arranged in a second operating position defining a second flow path;
- fig. 5 represents two different views of the flow selection means of the distributor of fig. 4;
- fig. 6 represents the distributor of fig. 1 with the flow selection means arranged in a third operating position defining a third flow path;
- fig. 7 represents two different views of the flow selection means of the distributor of fig. 6;
- fig. 8 represents the distributor of the invention provided with a variant embodiment of the flow selection means arranged in a first operating position defining a first flow path;
- fig. 9 represents two different views of the flow selection means of the distributor of fig. 8;
- fig. 10 represents the distributor of fig. 8 with the flow selection means arranged in a second operating position defining a second flow path;
- fig. 11 represents two different views of the flow selection means of the distributor of fig. 10;
- fig. 12 represents the distributor of fig. 8 with the flow selection means arranged in a third operating position defining a third flow path;
- fig. 13 represents two different views of the flow selection means of the distributor of fig. 12;
- fig. 14 represents the distributor of the invention provided with another variant embodiment of the flow selection means arranged in a first operating position defining a first flow path;
- fig. 15 represents two different views of the flow selection means of the distributor of fig. 14;
- fig. 16 represents the distributor of fig. 14 with the flow selection means arranged in a second operating position defining a second flow path;
- fig. 17 represents two different views of the flow selection means of the distributor of fig. 16;
- fig. 18 represents the distributor of fig. 14 with the flow selection means arranged in a third operating position defining a third flow path;
- fig. 19 represents two different views of the flow selection means of the distributor of fig. 18;
- fig. 20 represents the distributor of the invention provided with a further variant embodiment of the flow selection means arranged in a first operating position defining a first flow path;
- fig. 21 represents two different views of the flow selection means of the distributor of fig. 20;
- fig. 22 represents the distributor of fig. 20 with the flow selection means arranged in a second operating position defining a second flow path;
- fig. 23 represents two different views of the flow selection means of the distributor of fig. 22;
- fig. 24 represents the distributor of fig. 20 with the flow selection means arranged in a third operating position defining a third flow path;
- fig. 25 represents two different views of the flow selection means of the distributor of fig. 24;
- fig. 26 represents the distributor of the invention provided with another variant embodiment of the flow selection means arranged in a first operating position defining a first flow path;
- fig. 27 represents two different views of the flow selection means of the distributor of fig. 26;
- fig. 28 represents the distributor of fig. 26 with the flow selection means arranged in a second operating position defining a second flow path;
- fig. 29 represents two different views of the flow selection means of the distributor of fig. 28;
- fig. 30 represents the distributor of fig. 26 with the flow selection means arranged in a third operating position defining a third flow path;
- fig. 31 represents two different views of the flow selection means of the distributor of fig. 30;
- fig. 32 represents a hydraulic system using any one of the distributors of the invention with the flow selection means arranged in a first operating position defining a first flow path;
- fig. 33 represents the system of fig. 32 with the flow selection means arranged in a second operating position defining a second flow path;
- fig. 34 represents the system of fig. 32 with the flow selection means arranged in a third operating position defining a third flow path.

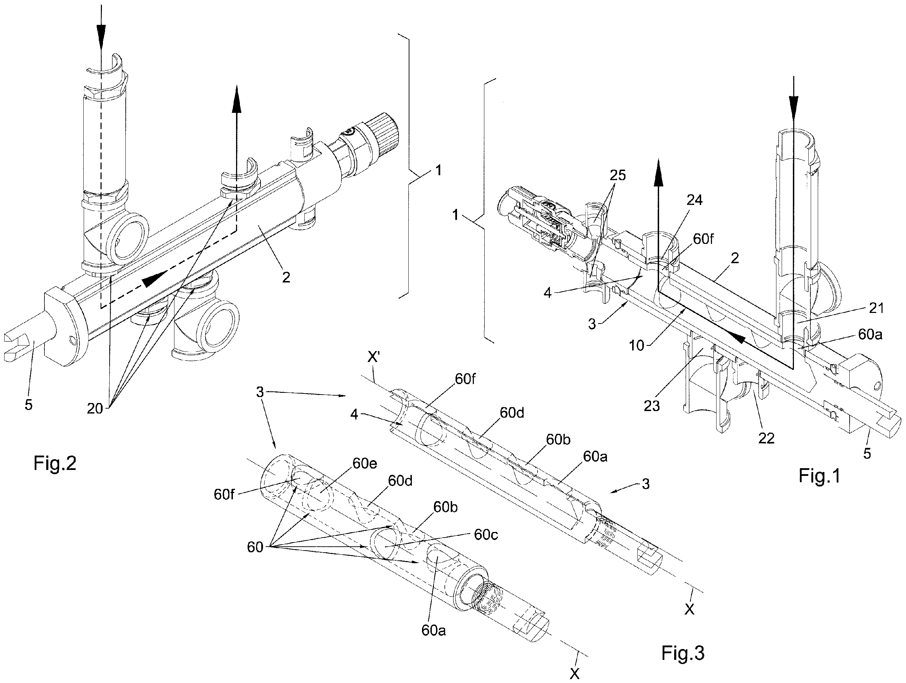

The hydraulic distributor of the invention is visible in the axonometric representations of figs. 1, 2, 4 and 6 where it is indicated in its entirety with **1.**

It should be observed that it comprises a distributor body **2** provided with flow mouths **20** adapted to be hydraulically connected to the ducts of a hydraulic system and a shutter body **3** associated in the distributor body **2** and provided with flow selection means **60** through the flow mouths **20.**

A manoeuvring member **5** belonging to the shutter body **3** to arrange the flow selection means **60** in different positions with respect to the flow mouths **20** is also provided so as to define different flow paths **10**, **80**, **90** through the flow mouths **20.**

First and foremost, it should be observed that the hydraulic system to which the hydraulic distributor **1** is applied may be of any type and preferably it shall be constituted by a system for heating and/or conditioning environments.

In addition, preferably but not necessarily, the manoeuvring member **5** may be constituted by an end of the shutter body **3** projecting from the distributor body **2** and adapted to be mechanically connected to driving members, not represented in the figures, managed by a command and control unit. Preferably, but not necessarily, the shutter body **3** is configured with a cylindrical shape so as to be arranged in different positions with respect to the flow mouths **20** by simply rotating it around the longitudinal axis **X** in the cylindrical seat of the shutter body **3** in which it is housed.

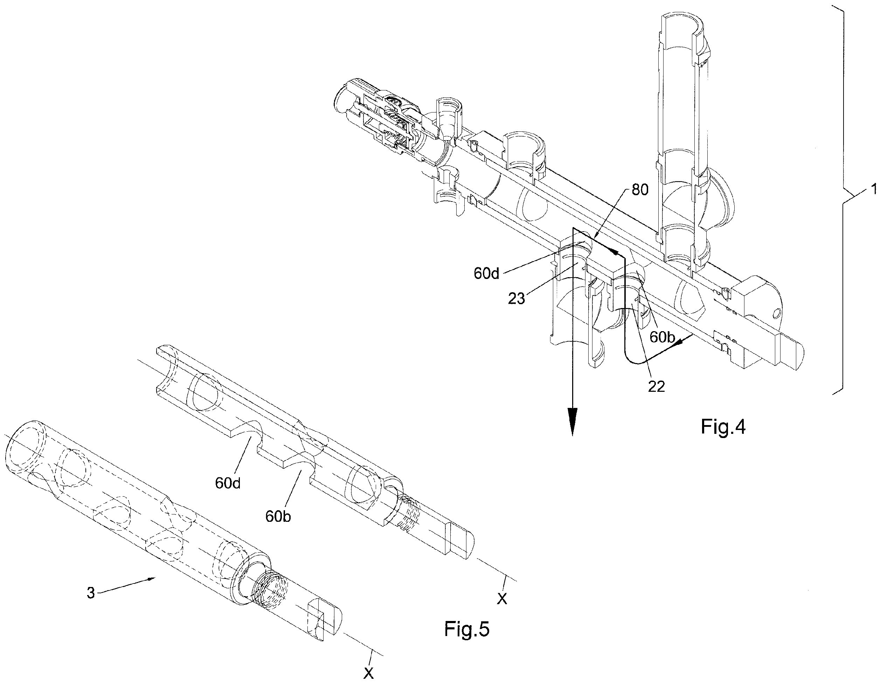

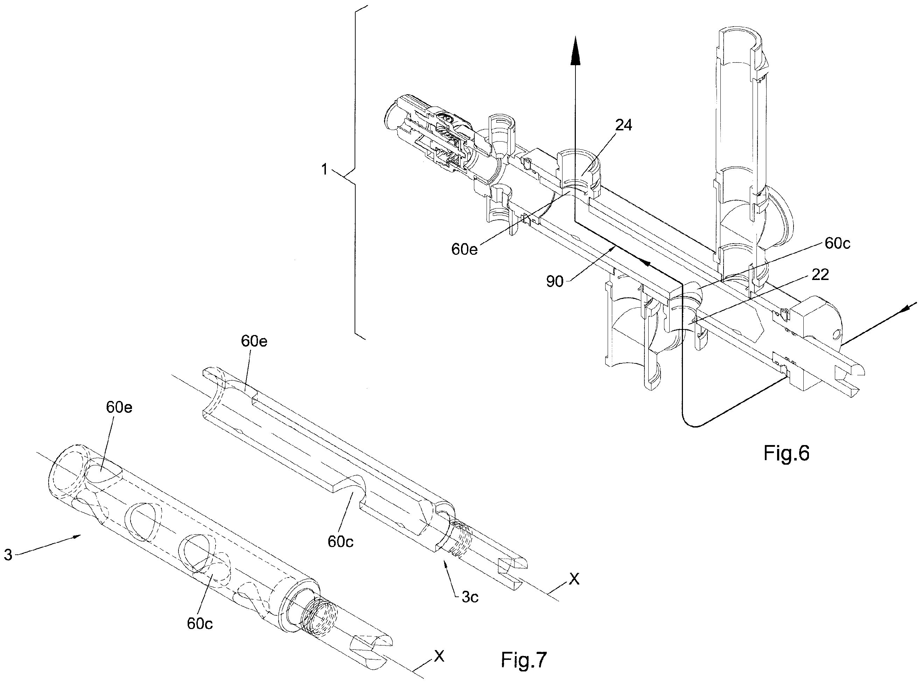

According to the invention, there are at least four flow mouths **20** and they comprise a first flow mouth **21**, a second flow mouth **22**, a third flow mouth **23** and a fourth flow mouth **24** and the flow selection means **60** are configured to be arranged in three different positions with respect to the flow mouths **20** so as to define three different flow paths **10**, **80**, **90** each of which develops between two of the aforementioned flow mouths **21**, **24**; **22**, **23**; **22**, **24** and through a collector chamber **4** present in the distributor body **2**, the aforementioned three different flow paths **10**, **80**, **90** comprising:
- a first flow path **10** between the first flow mouth **21** and the fourth flow mouth **24** illustrated in figs. 1 and 2;
- a second flow path **80** between the second flow mouth **22** and the third flow mouth **23** illustrated in fig. 4;
- a third flow path **90** between the second flow mouth **22** and the fourth flow mouth **24** illustrated in fig. 6.

In the distributor body **2** there are also present one or more intake mouths indicated with **25** in fig. 1 adapted to receive the connection of means for detecting parameters of the fluid that circulates in the distributor.

As regards the flow selection means **60**, it is observed particularly in figs. 3, 5 and 7 that they comprise six flow ways arranged along the shutter body **3**, and particularly:
- a first **60a** and a sixth **60f** flow way each arranged in proximity of an end of the shutter body **3** and aligned according to a longitudinal direction **X'** parallel to the longitudinal axis **X** defined by the shutter body **3**;
- a second **60b** and a fourth **60d** flow way, comprised between the first **60a** and the sixth **60f** flow ways and aligned one after the other parallel and laterally with respect to the longitudinal direction **X'**;
- a third flow way **60c** arranged adjacent to the second flow way **60b** laterally with respect to the longitudinal direction **X'**, the centre of both the flow ways **60c, 60b** belonging to a plane transverse to the longitudinal axis **X** of the shutter body **3**;
- a fifth flow way **60e** which is arranged adjacent to the sixth flow way **60f** laterally with respect to the longitudinal direction **X'**, the centre of both the flow ways **60c, 60b** belonging to a plane transverse to the longitudinal axis **X** of the shutter body **3.**

The shutter body **3** can be rotated around the axis **X** through the manoeuvring member **5** so as to be arranged in three different positions with respect to the flow mouths **20** where each position corresponds to a different flow path.

In this manner, through the distributor **1** there are defined three different flow paths **10**, **80**, **90** comprising:
- a first flow path **10** corresponding to a first position of the shutter body **3** in which the first flow mouth **21** is placed in communication with the first flow way **60a** and the fourth flow mouth **24** is placed in communication with the sixth flow way **60f**, as observable in fig. 1;
- a second flow path **80** corresponding to a second position of the shutter body **3** in which the second flow mouth **22** is placed in communication with the second flow way **60b** and the third flow mouth **23** is placed in communication with the fourth flow way **60d**, as observable in fig. 4;
- a third flow path **90** corresponding to a third position of the shutter body **3** in which the second flow mouth **22** is placed in communication with the third flow way **60c** and the fourth flow mouth **24** is placed in communication with the fifth flow way **60e**, as observable in fig. 6.

Each of the aforementioned flow paths **10**, **80**, **90** develops through the collector chamber **4** which is defined in each shutter body **3.**

Operatively, connecting the hydraulic distributor **1** to a hydraulic system, for example to a heating and/or conditioning system comprising a heat pump and a heat generator, for example a condensing boiler, will allow obtaining the operation of the aforementioned system using the boiler alone or the heat pump alone or both in a hybrid fashion, alternatively choosing the three different flow paths as better explained hereinafter with reference to three specific systems.

Some variant embodiments of the distributor of the invention, each of which provides for a different embodiment of the shutter body and the flow selection means, are provided for.

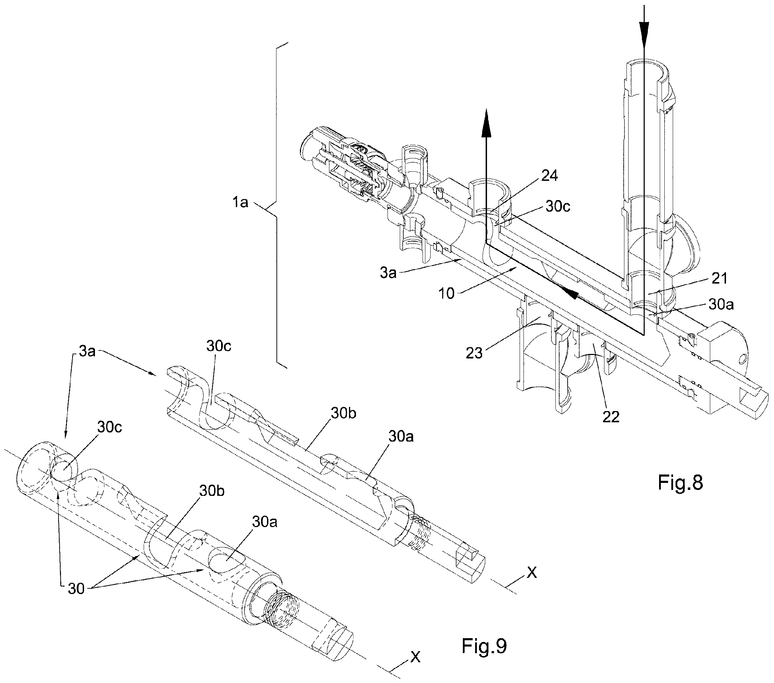

A first variant embodiment of the distributor of the invention is represented in figs. 8, 10 and 12 where it is indicated in its entirety with **1a** and it provides for, with reference to figs. 9, 11 and 13, flow selection means indicated in their entirety with **30**, comprising three flow ways arranged along the shutter body **3a**, and particularly:
- a first **30a** and a third **30c** flow way each arranged in proximity of an end of the shutter body **3a**;
- a second flow way **30b** comprised between the first **30a** and the third **30c** flow way.

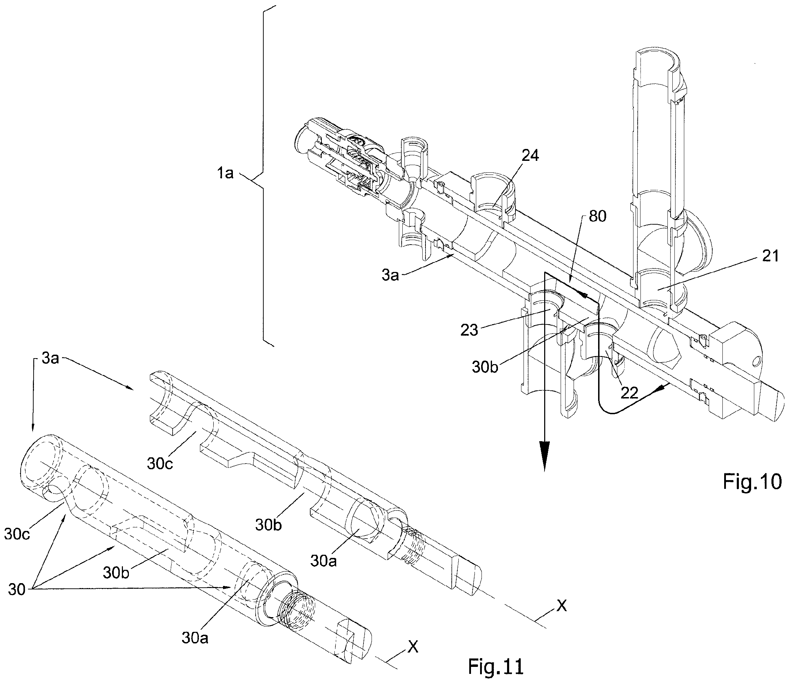

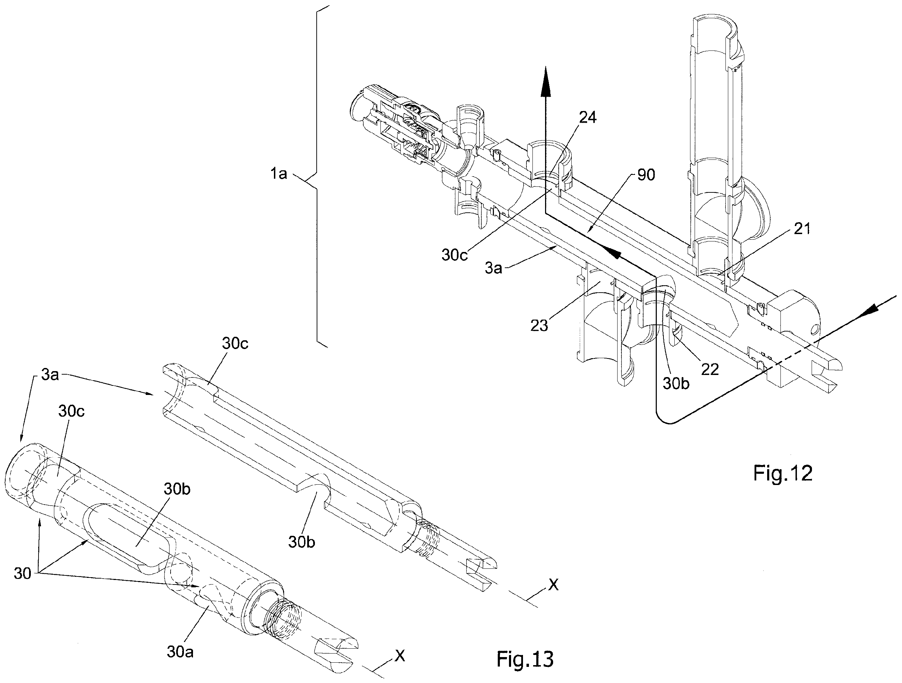

This allows obtaining the three different flow paths **10**, **80**, **90** described previously, each corresponding to a different position of the shutter body **3a**, comprising:
- a first flow path **10** in which the first flow mouth **21** is placed in communication with the first flow way **30a** and the fourth flow mouth **24** is placed in communication with the third flow way **30c**, as observable in fig. 8;
- a second flow path **80** in which the second flow mouth **22** and the third flow mouth **23** are both placed in communication with the second flow way **30b**, as observable in fig. 10;
- a third flow path **90** wherein the second flow mouth **22** is placed in communication with the second flow way **30b** and the fourth flow mouth **24** is placed in communication with the third flow way **30c**, as observable in fig. 12.

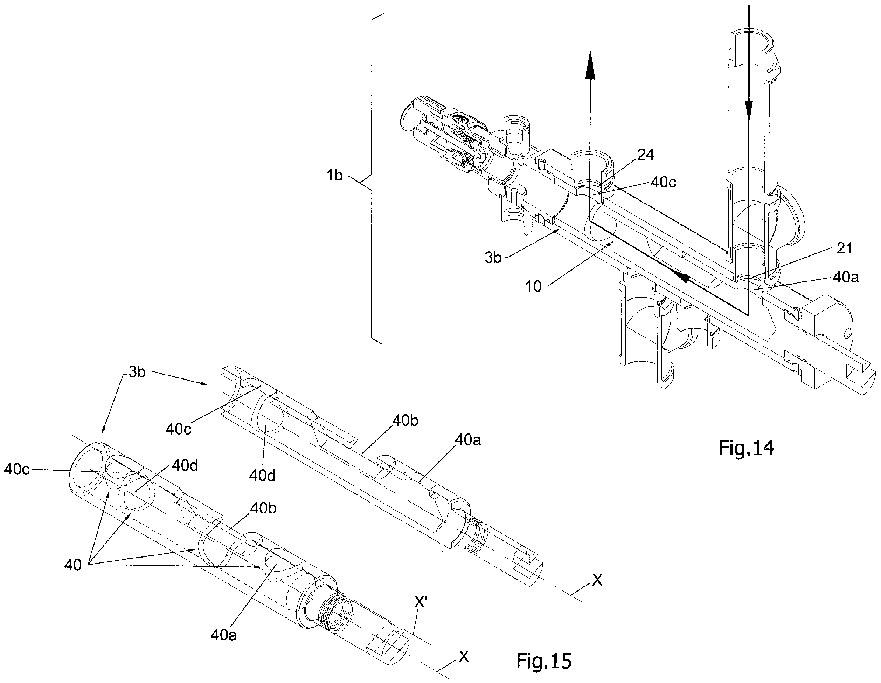

There is also provided for another variant embodiment of the distributor of the invention indicated in its entirety with **1b** and represented in figs. 14, 16 and 18 wherein the flow selection means, indicated in their entirety with **40** and visible in figs. 15, 17 and 19, comprise four flow ways arranged along the shutter body **3b**, and particularly:
- a first **40a** and a third **40c** flow way each arranged in proximity of an end of the shutter body **3b** and mutually aligned according to a longitudinal direction **X'** parallel to the longitudinal axis **X** defined by the shutter body **3b**;
- a second flow way **40b** comprised between the first **40a** and the third **40c** flow way;
- a fourth flow way **40d** arranged adjacent to the third flow way **40c** laterally with respect to the longitudinal axis **X**, where the centre of both flow ways **40d, 40c** belongs to a plane transverse to the longitudinal axis **X** of the shutter body **3b.**

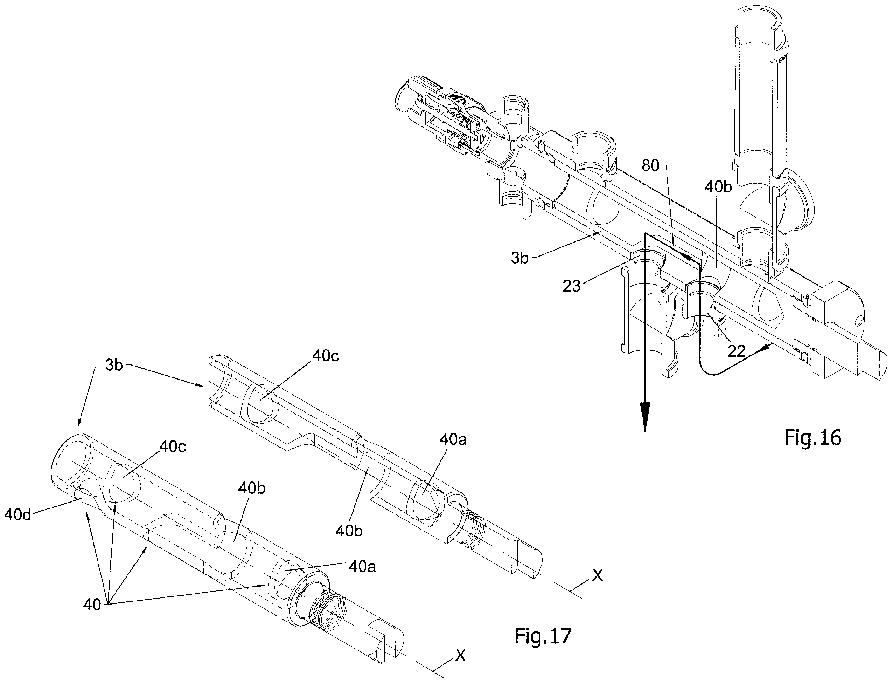

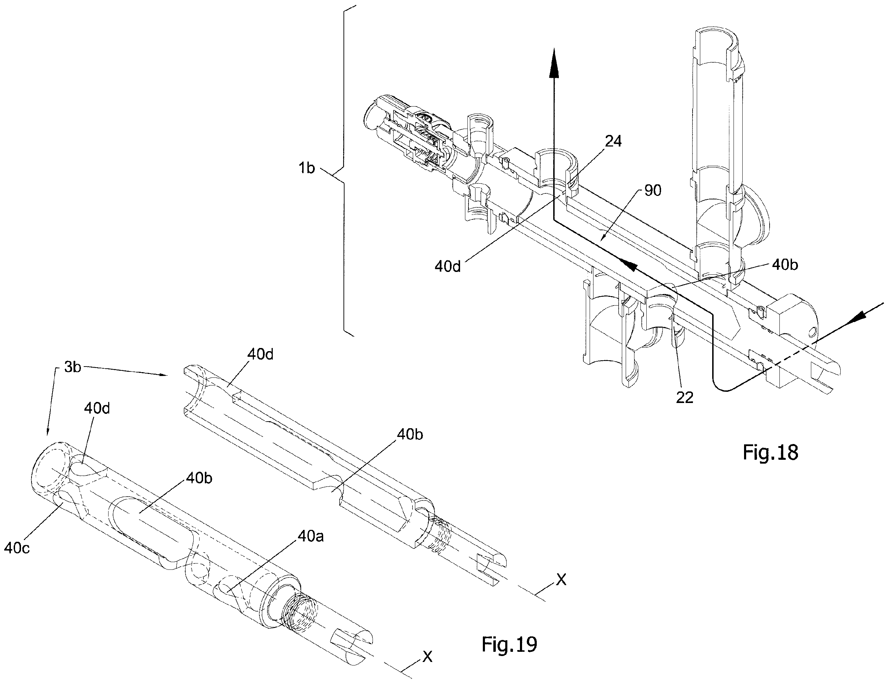

Thus, there are defined three different flow paths **10**, **80**, **90** each at a different position of the shutter body **3b,** comprising:
- a first flow path **10** in which the first flow mouth **21** is placed in communication with the first flow way **40a** and the fourth flow mouth **24** is placed in communication with the third flow way **40c**, as observable in fig. 14;
- a second flow path **80** in which the second flow mouth **22** and the third flow mouth **23** are both placed in communication with the second flow way **40b**, as observable in fig. 16;
- a third flow path **90** in which the second flow mouth **22** is placed in communication with the second flow way **40b** and the fourth flow mouth **24** is placed in communication with the fourth flow way **40d**, as observable in fig. 18.

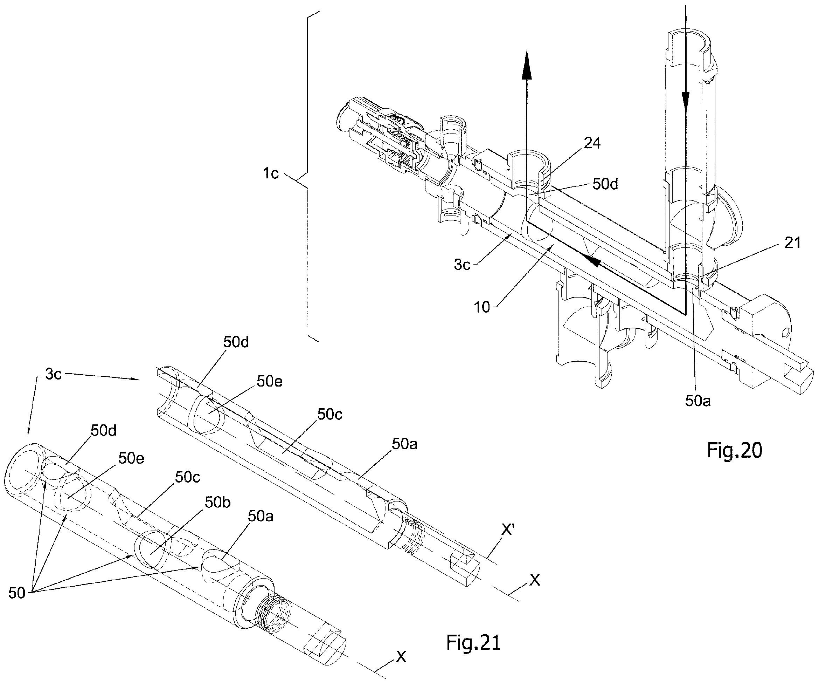

A further variant embodiment of the distributor of the invention, indicated in its entirety with **1c** and represented in figs. 20, 22 and 24, provides for flow selection means, indicated in their entirety with **50**, which comprise five flow ways visible in figs. 21, 23 and 25 arranged along the shutter body **3c**, and particularly:
- a first **50a** and a fourth **50d** flow way each arranged in proximity of an end of the shutter body **3c** and mutually aligned according to a longitudinal direction **X'** parallel to the longitudinal axis **X** defined by the shutter body **3c**;
- a second flow way **50b** and a third flow way **50c** both comprised between the first **50a** and the fourth **50d** flow way with the second way **50b** arranged closer to the first way **50a**, which are arranged adjacent to each other and which are arranged on opposite sides of the longitudinal direction **X'**;
- a fifth flow way **50e** arranged adjacent to the fourth flow way **50d** and laterally with respect to the longitudinal axis **X.**

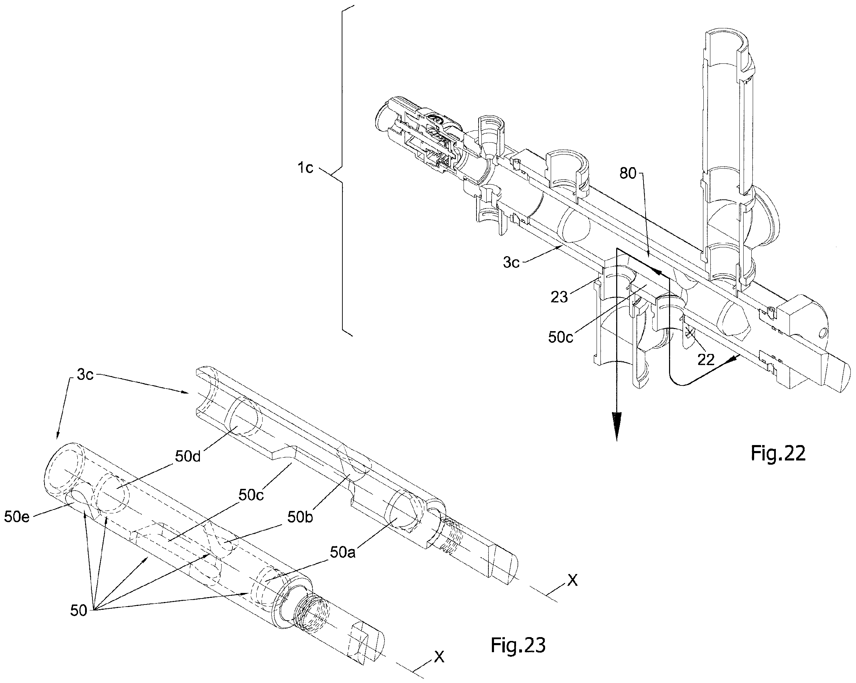

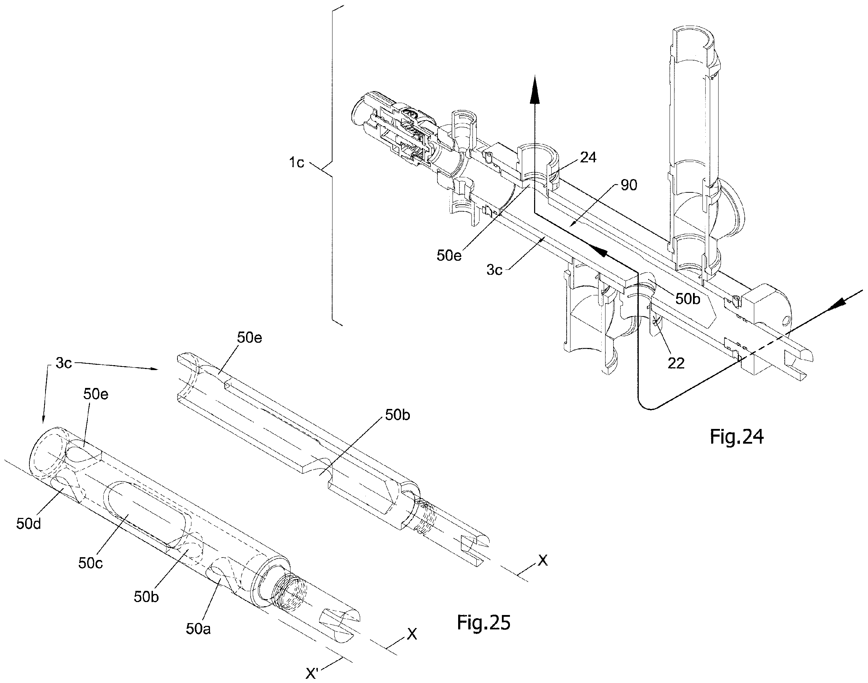

There are obtained three different flow paths **10**, **80**, **90** comprising:
- a first flow path **10** in which the first flow mouth **21** is placed in communication with the first flow way **50a** and the fourth flow mouth **24** is placed in communication with the fourth flow mouth **50d**, as observable in fig. 20;
- a second flow path **80** in which the second flow mouth **22** and the third flow mouth **23** are both placed in communication with the third flow way **50c**, as observable in fig. 22;
- a third flow path **90** in which the second flow mouth **22** is placed in communication with the second flow way **50b** and the fourth flow mouth **24** is placed in communication with the fifth flow way **50e**, as observable in fig. 24.

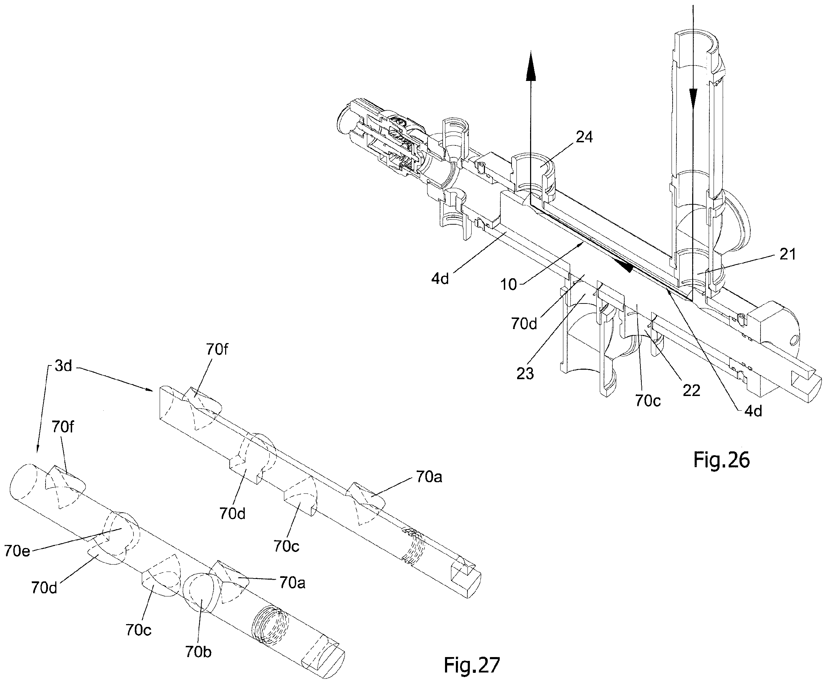

There is also provided for another variant embodiment of the distributor of the invention indicated in its entirety with **1d** and represented in figs. 26, 28 and 30 in which the flow selection means, indicated in their entirety with **70**, comprise shaped cores **70a**, **70b**, **70c**, **70d**, **70e**, **70f** projecting from the shutter body **3d** as observable in figs. 27, 29 and 31 and they can be joined with the flow mouths **21**, **22**, **23**, **24.**

In particular, even in this variant embodiment the shutter body **3d** may be arranged in three different positions in each one of which two of the aforementioned shaped cores close two of the aforementioned flow ways to define a corresponding flow path **10**, **80**, **90** through the pairs **21**, **24**; **22**, **23**; **22**, **24** of flow mouths that remain open and the collector chamber **4d** present in the distributor body **2** that, in this variant embodiment, is defined by the interspace comprised between the outer surface **3'd** of the shutter body **3d** and the inner surface **2a** of the distributor body **2.**

In particular, it should be observed that the shaped cores **70a**, **70b**, **70c**, **70d**, **70e**, **70f** comprise:
- a first **70a** and a sixth **70f** shaped core each arranged in proximity of an end of the shutter body **3d** and aligned according to a longitudinal direction **X'** parallel to the longitudinal axis **X** defined by the shutter body **3d**;
- a third **70c** and a fourth **70d** shaped core comprised between the first **70a** and the sixth **70f** shaped core and aligned with respect to each other parallel and laterally with respect to the longitudinal direction **X'**;
- a second shaped core **70b** arranged adjacent to the first shaped core **70a** laterally with respect to the longitudinal direction **X'**, where the centre of both shaped cores **70a**, **70b** belongs to a plane transverse to the longitudinal axis **X** of the shutter body **3d**;
- a fifth shaped core **70e** arranged adjacent to the fourth shaped core **70d** and arranged laterally with respect to the longitudinal direction **X'**, where the centre of both shaped cores **70e**, **70d** belongs to a plane transverse to the longitudinal axis **X** of the shutter body **3d.**

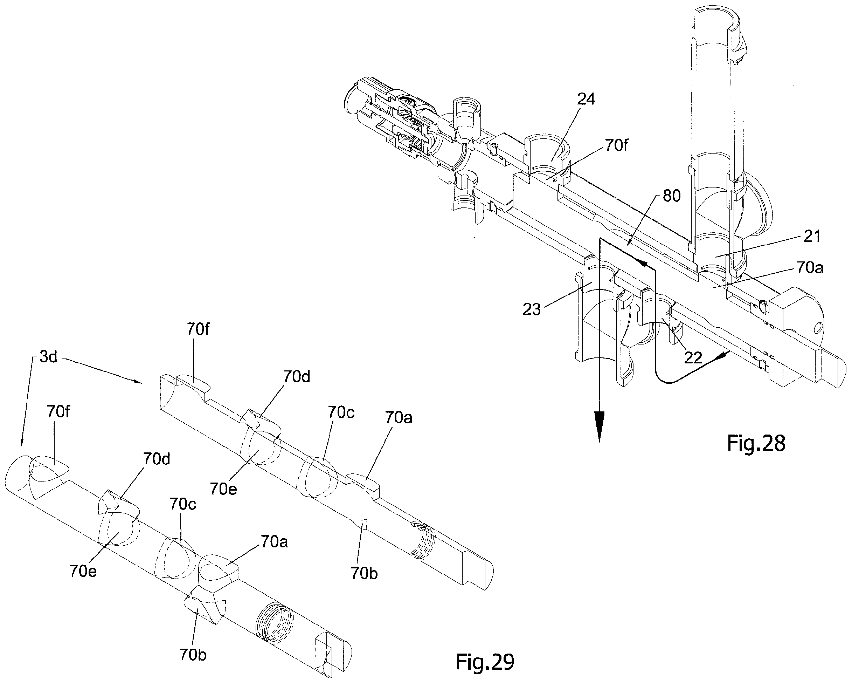

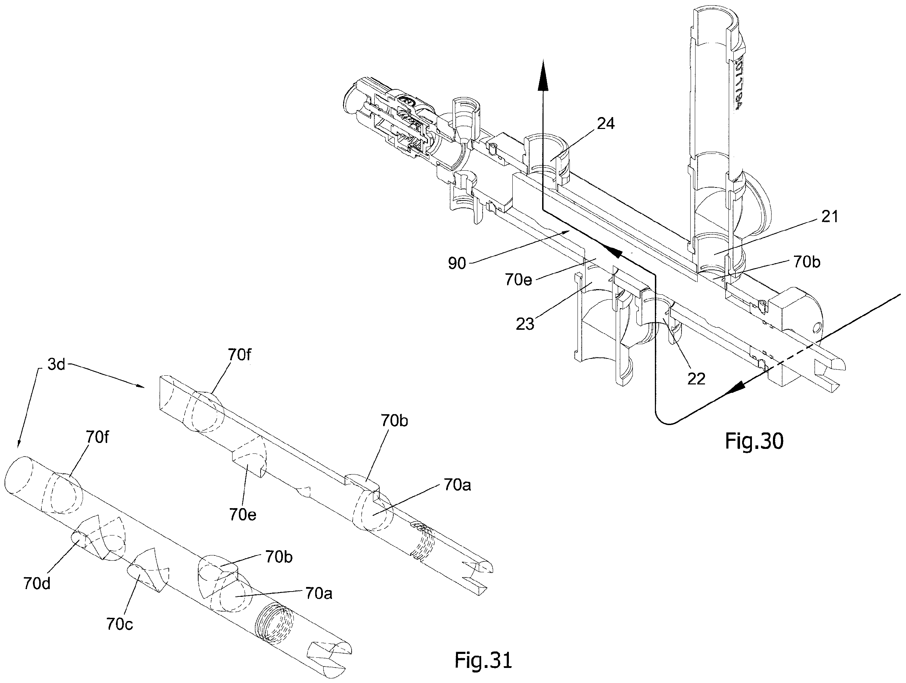

Thus, the three different flow paths **10**, **80**, **90** each corresponding to a different position of the shutter body **3d,** comprise:
- a first flow path **10** in which the third shaped core **70c** closes the second flow mouth **22** and the fourth shaped core **70d** closes the third flow mouth **23**, as observable in fig. 26;
- a second flow path **80** in which the first shaped core **70a** closes the first flow mouth **21** and the sixth shaped core **70f** closes the fourth flow mouth **24**, as observable in fig. 28;
- a third flow path **90** in which the second shaped core **70b** closes the first flow mouth **21** and the fifth shaped core **70e** closes the third flow mouth **23**, as observable in fig. 30.

As regards the hydraulic distributor of the invention concerning which five variant embodiments, each one of which corresponding to a different embodiment of the shutter body, have been described, also further variant embodiments can be possibly obtained by shaping the shutter body in further different ways not described herein.

The hydraulic distributor of the invention, in any of the embodiments it may be obtained, may be used, as previously mentioned, in hydraulic systems, preferably but not exclusively for heating and/or conditioning.

Hereinafter there is provided a description of three systems each one of which uses a hydraulic distributor **1** provided with the shutter body **3** in which the previously described flow selection means comprise six flow ways indicated in their entirety with **60.**

It should however be observed that the choice of using such variant embodiment of the hydraulic distributor of the invention was solely for exemplification purposes given that, as previously mentioned, the hydraulic distributor to be used may be any from among the described variants.

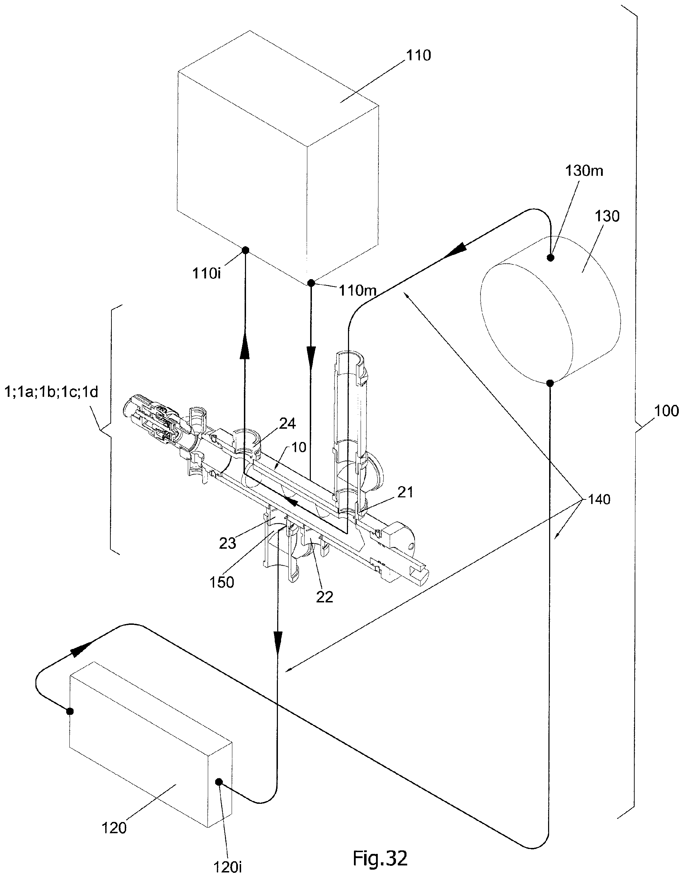

The hydraulic system of the invention, indicated in its entirety with **100**, is visible in fig. 32 where it should be observed that it comprises:
- a heat generator **110** for heating a heat carrier fluid;
- a heat exchange unit **120** configured to be traversed by the heat carrier fluid;
- a pump **130** for circulating the heat carrier fluid;
- a plurality of ducts **140** for the circulation of the heat carrier fluid.

In the system, the hydraulic distributor **1** of the invention is arranged with the shutter body in a position adapted to define the first flow mouth **10** in which the first flow mouth **21** is connected to the delivery mouth **130m** of the circulation pump **130**; the fourth flow mouth **24** is connected to the inlet **110i** of the fluid in said heat generator **110**; the second flow mouth **22** is closed; the third flow mouth **23** is closed and it is configured to support a first connection sleeve **150** which places the delivery mouth **110m** of the heat generator **110** in communication with the inlet **120i** of the heat exchange unit **120.**

In this manner, the hydraulic distributor **1**, or in any of the other variants described herein, is used in a hydraulic system **100** of the type adapted to obtain the heating of an environment by means of a boiler **110.**

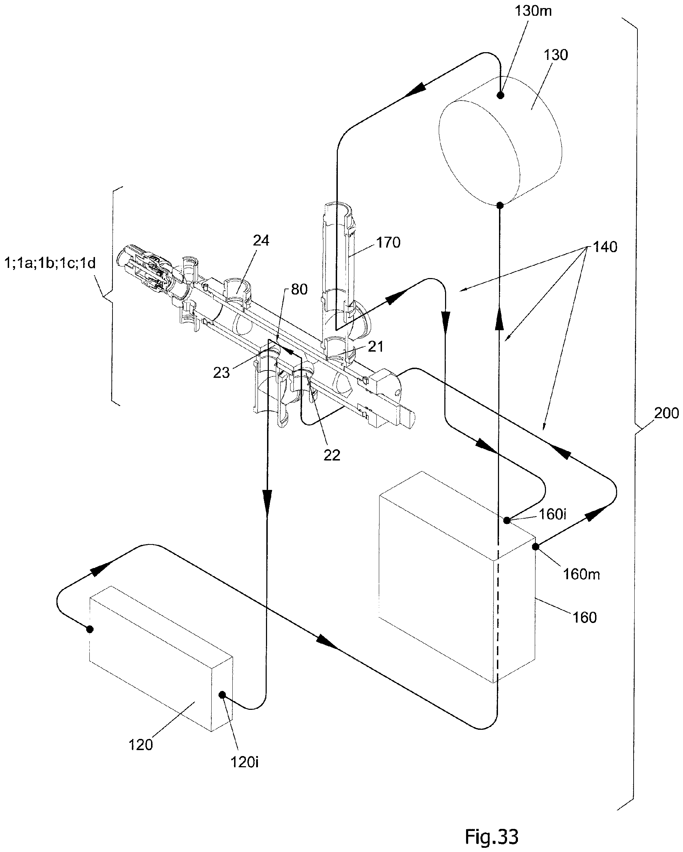

Another embodiment of the hydraulic system is represented in fig. 33 where it is indicated in its entirety with **200** and it comprises:
- a heat pump **160** for varying the temperature of a heat carrier fluid;
- a heat exchange unit **120** configured to be traversed by the heat carrier fluid;
- a pump **130** for circulating the heat carrier fluid;
- a plurality of ducts **140** for the circulation of the heat carrier fluid.

The system uses the hydraulic distributor **1** of the invention which is arranged in a position suitable to define the second flow path **80** in which: the second flow mouth **22** is connected to the delivery mouth **160m** of the heat pump **160**; the third flow mouth **23** is connected to the inlet **120i** of the heat exchange unit **120**; the fourth flow mouth **24** is closed; the first flow mouth **21** is closed and supports a second connection sleeve **170** that places the delivery mouth **130m** of the circulation pump **130** in communication with the inlet **160i** of the heat pump **160.**

Thus, the hydraulic distributor **1** of the invention is used in a hydraulic system for heating and/or cooling or conditioning an environment by means of the heat pump **160.**

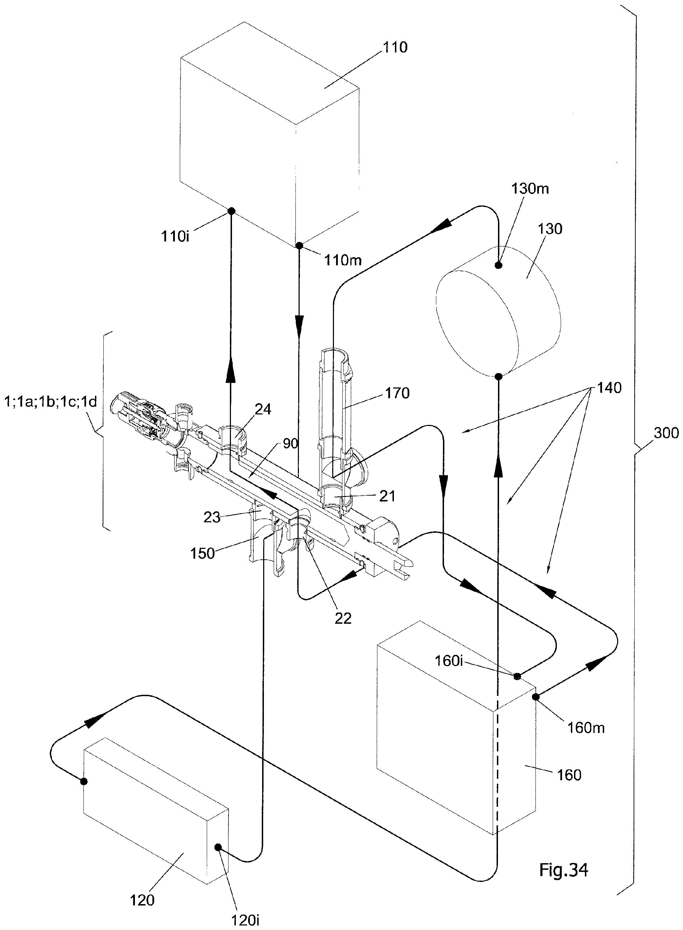

Lastly, the particularly important and interesting use of the hydraulic distributor of the invention in any one of the described embodiments is represented in fig. 34 where it is used in a hydraulic system indicated in its entirety with **300** comprising:
- a heat pump **160** for varying the temperature of a heat carrier fluid;
- a heat generator **110** for heating the heat carrier fluid previously heated and flowing out from heat pump **160**;
- a heat exchange unit **120** configured to be traversed by the heat carrier fluid flowing out from the heat generator **110**;
- a pump **130** for circulating the heat carrier fluid;
- a plurality of ducts **140** for the circulation of the heat carrier fluid.

In the system, the hydraulic distributor **1** of the invention is arranged in a position suitable to define the third flow path **90** in which:
- the second flow mouth **22** is connected to the delivery mouth **160m** of the heat pump **160**;
- the fourth flow mouth **24** is connected to the inlet **110i** of the heat generator **110**;
- the third flow mouth **23** is connected to the inlet **120i** of the heat exchange unit **120** and the first flow mouth **21** is closed and it supports a second connection sleeve **170** that places the delivery mouth **130m** of the circulation pump **130** in communication with the inlet **160i** of the heat pump **160.**

In this use, the system represented in fig. 34 operates in a hybrid fashion given that the heating of the heat carrier fluid occurs through the combined heating action of the heat pump and the boiler.

It is clear that, as a function of the temperature characteristics of the environment to be heated and the external environment, suitably intervening on the shutter body of the hydraulic distributor allows setting the system in the conditions where the heat generator **110** alone operates, thus creating the operating condition of the system represented in fig. 32, or with the heat pump alone operating, in this case there being configured the operation of the system represented in fig. 33.

Thus, in the light of the above, it is clear that the improved hydraulic distributor subject of the invention attains all preset objects.

In particular, the object of possibly having a single distributor provided with a single shutter body that is applied to a system comprising a heat generator, particularly a boiler and a heat pump, which allows operating the system using the boiler alone or the heat pump alone or both in the hybrid mode by simply acting on the shutter, is attained.

During the execution step, the hydraulic distributor of the invention may be subjected to modifications and variants not described and not represented in the figures.

It should however be observed that, should such variants and modifications fall within the scope of protection of the claims that follow, they shall definitely be deemed to fall within the scope of protection of the present patent.

## Claims

1. Hydraulic distributor (1; 1a; 1b; 1c; 1d) comprising:
- a distributor body (2) provided with flow mouths (20) adapted to be hydraulically connected to the ducts of a hydraulic system;
- a shutter body (3, 3a, 3b, 3c, 3d) associated in said distributor body (2) and provided with means (30, 40, 50, 60, 70) for selecting the flow through said flow mouths (20);
- at least one member (5) for manoeuvring said shutter body (3, 3a, 3b, 3c, 3d) adapted to arrange said flow selection means (30, 40, 50, 60, 70) in different positions with respect to said flow mouths (20) to define different flow paths (10, 80, 90) through said flow mouths (20), said flow mouths (20) being at least four and comprising a first flow mouth (21), a second flow mouth (22), a third flow mouth (23) and a fourth flow mouth (24),
**characterised in that** said flow selection means (30, 40, 50, 60, 70) are configured to be arranged in three different positions with respect to said flow mouths (20) to define three different flow paths (10, 80, 90), each one of which develops between two of said flow mouths (21, 24; 22, 23; 22, 24) and through a collector chamber (4, 4d) present in said distributor body (2), said three different flow paths (10, 80, 90) comprising:
- a first flow path (10) between said first flow mouth (21) and said fourth flow mouth (24);
- a second flow path (80) between said second flow mouth (22) and said third flow mouth (23);
- a third flow path (90) between said second flow mouth (22) and said fourth flow mouth (24).

2. Hydraulic distributor (1; 1a; 1b; 1c) according to claim 1, **characterised in that** said flow selection means (30, 40, 50, 60) comprise flow ways obtained in said shutter body (3, 3a, 3b, 3c) and communicating with said collection chamber (4) defined in said shutter body (3, 3a, 3b, 3c), said flow ways being configured so that in each of said three positions a pair of said flow ways is joined to a pair (21, 24; 22, 23; 22, 24) of said flow mouths (20; 21, 22, 23, 24) to define a corresponding flow path of said three different flow paths (10, 80, 90).

3. Hydraulic distributor (1) according to claim 2, **characterised in that** said flow selection means (60) comprise six flow ways arranged along said shutter body (3), and particularly:
- a first (60a) and a sixth (60f) flow way each arranged in proximity of an end of said shutter body (3) and aligned according to a longitudinal direction (X') parallel to the longitudinal axis (X) defined by said shutter body (3);
- a second (60b) and a fourth (60d) flow way, comprised between said first (60a) and said sixth (60f) flow way and aligned one after the other parallel and laterally with respect to said longitudinal direction (X');
- a third flow way (60c) arranged adjacent to said second flow way (60b) laterally with respect to said longitudinal direction (X'), the centre of both said flow ways (60c, 60b) belonging to a plane transverse to said longitudinal axis (X) of said shutter body (3);
- a fifth flow way (60e) arranged adjacent to said sixth flow way (60f) laterally with respect to said longitudinal direction (X'), the centre of both said flow ways (60c, 60b) belonging to a transverse plane with respect to said longitudinal axis (X) of said shutter body (3),
said three different flow paths (10, 80, 90) comprising:
- a first flow path (10) wherein said first flow mouth (21) is placed in communication with said first flow way (60a) and said fourth flow mouth (24) is placed in communication with said sixth flow way (60f);
- a second flow path (80) wherein said second flow mouth (22) is placed in communication with said second flow way (60b) and said third flow mouth (23) is placed in communication with said fourth flow way (60d);
- a third flow path (90) wherein said second flow mouth (22) is placed in communication with said third flow way (60c) and said fourth flow mouth (24) is placed in communication with said fifth flow way (60e).

4. Hydraulic distributor (1a) according to claim 2, **characterised in that** said flow selection means (30) comprise three flow ways arranged along said shutter body (3a), and particularly:
- a first (30a) and a third (30c) flow way each arranged in proximity of an end of said shutter body (3a);
- a second flow way (30b) comprised between said first (30a) and said third (30c) flow way;
said three different flow paths (10, 80, 90) comprising:
- a first flow path (10) wherein said first flow mouth (21) is placed in communication with said first flow way (30a) and said fourth flow mouth (24) is placed in communication with said third flow way (30c);
- a second flow path (80) wherein said second flow mouth (22) and said third flow mouth (23) are both placed in communication with said second flow way (30b);
- a third flow path (90) wherein said second flow mouth (22) is placed in communication with said second flow way (30b) and said fourth flow mouth (24) is placed in communication with said third flow way (30c).

5. Hydraulic distributor (1b) according to claim 2, **characterised in that** said flow selection means (40) comprise four flow ways arranged along said shutter body (3b), and particularly:
- a first (40a) and a third (40c) flow way each arranged in proximity of an end of said shutter body (3b) and aligned with respect to each other according to a longitudinal direction (X') parallel to the longitudinal axis (X) defined by said shutter body (3b);
- a second flow way (40b) comprised between said first (40a) and said third (40c) flow way;
- a fourth flow way (40d) arranged adjacent to said third flow way (40c) laterally with respect to said longitudinal axis (X), the centre of both said flow ways (40d, 40c) belonging to a plane transverse to said longitudinal axis (X) of said shutter body (3b),
said three different flow paths (10, 80, 90) comprising:
- a first flow path (10) wherein said first flow mouth (21) is placed in communication with said first flow way (40a) and said fourth flow mouth (24) is placed in communication with said third flow way (40c);
- a second flow path (80) wherein said second flow mouth (22) and said third flow mouth (23) are both placed in communication with said second flow way (40b);
- a third flow path (90) wherein said second flow mouth (22) is placed in communication with said second flow way (40b) and said fourth flow mouth (24) is placed in communication with said fourth flow way (40d).

6. Hydraulic distributor (1c) according to claim 2, **characterised in that** said flow selection means (50) comprise five flow ways arranged along said shutter body (3c), and particularly:
- a first (50a) and a fourth (50d) flow way each arranged in proximity of an end of said shutter body (3c) and aligned with respect to each other according to a longitudinal direction (X') parallel to the longitudinal axis (X) defined by said shutter body (3c);
- a second flow way (50b) and a third flow way (50c) both comprised between said first (50a) and said fourth (50d) flow way, said second flow way (50b) being closer to said first flow way (50a), said flow ways being arranged adjacent with respect to each other and being arranged on opposite sides of said longitudinal direction (X');
- a fifth flow way (50e) arranged adjacent to said fourth flow way (50d) laterally with respect to said longitudinal axis (X),
said three different flow paths (10, 80, 90) comprising:
- a first flow path (10) wherein said first flow mouth (21) is placed in communication with said first flow way (50a) and said fourth flow mouth (24) is placed in communication with said fourth flow way (50d);
- a second flow path (80) wherein said second flow mouth (22) and said third flow mouth (23) are both placed in communication with said third flow way (50c);
- a third flow path (90) wherein said second flow mouth (22) is placed in communication with said second flow way (50b) and said fourth flow mouth (24) is placed in communication with said fifth flow way (50e).

7. Hydraulic distributor (1d) according to claim 1, **characterised in that** said flow selection means (70) comprise six shaped cores (70a, 70b, 70c, 70d, 70e, 70f) projecting from said shutter body (3d) and which can be joined with said flow mouths (20; 21, 22, 23, 24) so that in each of said three positions two of said shaped cores close two of said flow ways to define a corresponding flow path (10, 80, 90) through the pair (21, 24; 22, 23; 22, 24) of flow mouths (20; 21, 22, 23, 24) still open and said collection chamber (4) which is defined by the interspace comprised between the outer surface (3'd) of said shutter body (3d) and the inner surface (2a) of said distributor body (2).

8. Hydraulic distributor (1d) according to claim 7, **characterised in that** said shaped cores (70a, 70b, 70c, 70d, 70e, 70f) comprise:
- a first (70a) and a sixth (70f) shaped core each arranged in proximity of an end of said shutter body (3d) and aligned according to a longitudinal direction (X') parallel to the longitudinal axis (X) defined by said shutter body (3d);
- a third (70c) and a fourth (70d) shaped core comprised between said first (70a) and said sixth (70f) shaped core and aligned with respect to each other parallel and laterally with respect to said longitudinal direction (X');
- a second shaped core (70b) arranged adjacent to said first shaped core (70a) laterally with respect to said longitudinal direction (X'), the centre of both said shaped cores (70a, 70b) belonging to a plane transverse to said longitudinal axis (X) of said shutter body (3d);
- a fifth shaped core (70e) arranged adjacent to said fourth shaped core (70d) laterally with respect to said longitudinal direction (X'), the centre of both said shaped cores (70e, 70d) belonging to a transverse plane with respect to said longitudinal axis (X) of said shutter body (3d),
said three different flow paths (10, 80, 90) comprising:
- a first flow path (10) wherein said third shaped core (70c) closes said second flow mouth (22) and said fourth shaped core (70d) closes said third flow mouth (23);
- a second flow path (80) wherein said first shaped core (70a) closes said first flow mouth (21) and said sixth shaped core (70f) closes said fourth flow mouth (24);
- a third flow path (90) wherein said second shaped core (70b) closes said first flow mouth (21) and said fifth shaped core (70e) closes said third flow mouth (23).

9. Hydraulic distributor (1; 1a; 1b; 1c; 1d) according to any one of the preceding claims, **characterised in that** said distributor body (2) and said shutter body (3, 3a, 3b, 3c, 3d) are cylindrical-shaped and rotatably coupled with respect to each other to arrange said flow selection means (30) in said three different positions with respect to said flow mouths (20) adapted to define said three different flow paths (10, 80, 90) when said shutter body (3) is rotated with respect to said distributor body (2).

10. Hydraulic system (100) comprising:
- at least one heat generator (110) for heating a heat carrier fluid;
- at least one heat exchange unit (120) configured to be traversed by said heat carrier fluid;
- a pump (130) for circulating said heat carrier fluid;
- a plurality of ducts (140) for the circulation of said heat carrier fluid,
**characterised in that** it comprises a hydraulic distributor (1; 1a; 1b; 1c; 1d) according to any one of the preceding claims arranged in a position adapted to define said first flow path (10) and having:
- said first flow mouth (21) connected to the delivery mouth (130m) of said circulation pump (130);
- said fourth flow mouth (24) connected to the inlet (110i) of said fluid into said heat generator (110);
- said second flow mouth (22) closed;
- said third flow mouth (23) closed and configured to support a first connection sleeve (150) which places the delivery mouth (110m) of said heat generator (110) in communication with the inlet (120i) of said heat exchange unit (120).

11. Hydraulic system (200) comprising:
- at least one heat pump (160) for varying the temperature of a heat carrier fluid;
- at least one heat exchange unit (120) configured to be traversed by said heat carrier fluid;
- a pump (130) for circulating said heat carrier fluid;
- a plurality of ducts (140) for the circulation of said heat carrier fluid,
**characterised in that** it comprises a hydraulic distributor (1; 1a; 1b; 1c; 1d) according to any one of the preceding claims 1 to 9, arranged in a position adapted to define said second flow path (80) and having:
- said second flow mouth (22) connected to the delivery mouth (160m) of said heat pump (160);
- said third flow mouth (23) connected to the inlet (120i) of said heat exchange unit (120);
- said fourth flow mouth (24) closed;
- said first flow mouth (21) closed which supports a second connection sleeve (170) which places the delivery mouth (130m) of said circulation pump (130) in communication with the inlet (160i) of said heat pump (160).

12. Hydraulic system (300) comprising:
- at least one heat pump (160) for varying the temperature of a heat carrier fluid;
- at least one boiler (110) for heating said heat carrier fluid flowing out from said heat pump (160);
- at least one heat exchange unit (120) configured to be traversed by said heat carrier fluid;
- a pump (130) for circulating said heat carrier fluid;
- a plurality of ducts (140) for the circulation of said heat carrier fluid,
**characterised in that** it comprises a hydraulic distributor (1; 1a; 1b; 1c; 1d) according to any one of the preceding claims 1 to 9, arranged in a position adapted to define said third flow path (90) and having:
- said second flow mouth (22) connected to the delivery mouth (160m) of said heat pump (160);
- said fourth flow mouth (24) connected to the inlet (110i) of said heat generator (110);
- said first flow mouth (21) closed and configured to support a second connection sleeve (170) which places the delivery mouth (130m) of said circulation pump (130) in communication with the inlet (160i) of said heat pump (160);
- said third flow mouth (23) closed and configured to support a first connection sleeve (150) which places the delivery mouth (110m) of said heat generator (110) in communication with the inlet (120i) of said heat exchange unit (120).

## Patentansprüche

1. Hydraulischer Verteiler (1; 1a; 1b; 1c; 1d), Folgendes umfassend:
- einen Verteilerkörper (2) mit Durchflussöffnung (20), die geeignet ist, hydraulisch an die Leitungen eines Hydrauliksystems angeschlossen zu werden;
- einen in dem besagten Verteilerkörper (2) zugeordneten Verschlusskörper (3, 3a, 3b, 3c, 3d), der mit Mitteln (30, 40, 50, 60, 70) zur Einstellung des Flusses durch die besagten Durchflussöffnungen (20) versehen ist;
- wenigstens ein Organ (5) zur Handhabung des besagten Verschlusskörpers (3, 3a, 3b, 3c, 3d), das geeignet ist, die besagten Flusseinstellmittel (30, 40, 50, 60, 70) in verschiedenen Positionen bezüglich der besagten Durchflussöffnungen (20) anzuordnen, um unterschiedliche Durchflussstrecken (10, 80, 90) durch die besagten Durchflussöffnungen (20) zu definieren, wobei die besagten Durchflussöffnungen (20) wenigstens vier sind und eine erste Durchflussöffnung (21), eine zweite Durchflussöffnung (22), eine dritte Durchflussöffnung (23) und eine vierte Durchflussöffnung (24) umfassen,
**dadurch gekennzeichnet, dass** die besagten Durchflusseinstellmittel (30, 40, 50, 60, 70) in drei verschiedenen Positionen bezüglich der besagten Durchflussöffnungen (20) konfiguriert sind, um unterschiedliche Durchflussstrecken (10, 80, 90) zu definieren, von denen jeder zwischen zweien der besagten Durchflussöffnungen (21, 24; 22, 23; 22, 24) und durch eine in dem besagten Verteilerkörper (2) befindliche Sammelkammer (4, 4d) verläuft, wobei die besagten drei unterschiedlichen Durchflussstrecken (10, 80, 90) Folgendes umfassen:
- eine erste Durchflussstrecke (10) zwischen der besagten ersten Durchflussöffnung (21) und der besagten vierten Durchflussöffnung (24);
- eine zweite Durchflussstrecke (80) zwischen der besagten zweiten Durchflussöffnung (22) und der besagten dritten Durchflussöffnung (23);
- eine dritte Durchflussstrecke (90) zwischen der besagten zweiten Durchflussöffnung (22) und der besagten vierten Durchflussöffnung (24).

2. Hydraulischer Verteiler (1; 1a; 1b; 1c) nach Patentanspruch 1, **dadurch gekennzeichnet, dass** die besagten Durchflusseinstellmittel (30, 40, 50, 60) in dem besagte Verschlusskörper (3, 3a, 3b, 3c) geformte Durchflusswege umfassen, die mit der besagten, in dem besagten Verschlusskörper (3, 3a, 3b, 3c) definierten Sammelkammer (4) kommunizieren, wobei die besagten Durchflusswege so konfiguriert sind, dass in jeder der drei Positionen ein Paar der besagten Durchflusswege mit einem Paar (21, 24; 22, 23; 22, 24) der besagten Durchflussöffnungen (20; 21, 22, 23, 24) verbunden ist, um eine entsprechende Durchflussstrecke aus den besagten drei unterschiedlichen Durchflussstrecken (10, 80, 90) zu definieren.

3. Hydraulischer Verteiler (1) nach Patentanspruch 2, **dadurch gekennzeichnet, dass** die besagten Durchflusseinstellmittel (60) sechs entlang des besagten Verschlusskörpers (3) angeordnete Durchflusswege umfassen, und zwar im Einzelnen:
- einen ersten (60a) und sechsten (60f) Durchflussweg, die jeweils in der Nähe eines Endes des besagten Verschlusskörpers (3) angeordnet und entlang einer Längsrichtung (X') ausgerichtet sind, die parallel zu der Längsachse (X) verläuft, welche durch den besagten Verschlusskörper (3) definiert wird;
- einen zweiten (60b) und einen vierten (60d) Durchflussweg zwischen dem besagten ersten (60a) und dem besagten sechsten (60f) Durchflussweg, die einer nach dem anderen parallel und seitliche bezüglich der besagten Längsrichtung (X') ausgerichtet sind;
- einen dritten Durchflussweg (60c), der an den besagten zweiten Durchflussweg (60b) angrenzend angeordnet ist, seitlich zu der besagten Längsrichtung (X'), wobei der Mittelpunkt beider besagter Durchflusswege (60c, 60b) zu einer Ebene gehört, die quer zu der besagten Längsachse (X) des besagten Verschlusskörpers (3) liegt;
- einen fünften Durchflussweg (60e), der an den besagten sechsten Durchflussweg (60f) angrenzend angeordnet ist, seitlich zu der besagten Längsrichtung (X'), wobei der Mittelpunkt beider besagter Durchflusswege (60c, 60b) zu einer bezüglich der besagten Längsachse (X) des besagten Verschlusskörpers (3) quer liegenden Ebene gehört,
wobei die besagten drei unterschiedlichen Durchflussstrecken (10, 80, 90) Folgendes umfassen:
- eine erste Durchflussstrecke (10), wobei die besagte erste Durchflussöffnung (21) mit dem besagten ersten Durchflussweg (60a) kommunizierend positioniert ist, und die besagte vierte Durchflussöffnung (24) mit dem besagten sechsten Durchflussweg (60f) kommunizierend positioniert ist;
- eine zweite Durchflussstrecke (80), wobei die besagte zweite Durchflussöffnung (22) mit dem besagten zweiten Durchflussweg (60b) kommunizierend positioniert ist, und die besagte dritte Durchflussöffnung (23) mit dem besagten vierten Durchflussweg (60d) kommunizierend positioniert ist;
- eine dritte Durchflussstrecke (90), wobei die besagte zweite Durchflussöffnung (22) mit dem besagten dritten Durchflussweg (60c) kommunizierend positioniert ist, und die besagte vierte Durchflussöffnung (24) mit dem besagten fünften Durchflussweg (60e) kommunizierend positioniert ist.

4. Hydraulischer Verteiler (1a) nach Patentanspruch 2, **dadurch gekennzeichnet, dass** die besagten Durchflusseinstellmittel (30) drei entlang des besagten Verschlusskörpers (3a) angeordnete Durchflusswege umfassen, und zwar im Einzelnen:
- einen ersten (30a) und einen dritten (30c) Durchflussweg, die beide in der Nähe eines Endes des besagten Verschlusskörpers (3a) angeordnet sind;
- einen zweiten Durchflussweg (30b), der zwischen dem besagten ersten (30a) und dem besagten dritten (30c) Durchflussweg positioniert ist;
wobei die besagten drei unterschiedlichen Durchflussstrecken (10, 80, 90) Folgendes umfassen:
- eine erste Durchflussstrecke (10), wobei die besagte erste Durchflussöffnung (21) mit dem besagten ersten Durchflussweg (30a) kommunizierend positioniert ist, und die besagte vierte Durchflussöffnung (24) mit dem besagten dritten Durchflussweg (30c) kommunizierend positioniert ist;
- eine zweite Durchflussstrecke (80), wobei die besagte zweite Durchflussöffnung (22) und die besagte dritte Durchflussöffnung (23) beide mit dem besagten zweiten Durchflussweg (30b) kommunizierend positioniert sind;
- eine dritte Durchflussstrecke (90), wobei die besagte zweite Durchflussöffnung (22) mit dem besagten zweiten Durchflussweg (30b) kommunizierend positioniert ist, und die besagte vierte Durchflussöffnung (24) mit dem besagten dritten Durchflussweg (30c) kommunizierend positioniert ist.

5. Hydraulischer Verteiler (1b) nach Patentanspruch 2, **dadurch gekennzeichnet, dass** die besagten Durchflusseinstellmittel (40) vier entlang des besagten Verschlusskörpers (3b) angeordnete Durchflusswege umfassen, und zwar im Einzelnen:
- einen ersten (40a) und einen dritten (40c) Durchflussweg, die jeweils in der Nähe eines Endes des besagten Verschlusskörpers (3b) angeordnet und entlang einer Längsrichtung (X') zueinander ausgerichtet sind, die parallel zu der Längsachse (X) verläuft, welche durch den besagten Verschlusskörper (3b) definiert wird;
- einen zweiten Durchflussweg (40b), der zwischen dem besagten ersten (40a) und dem besagten dritten (40c) Durchflussweg positioniert ist;
- einen vierten Durchflussweg (40d), der an den besagten dritten Durchflussweg (40c) angrenzend angeordnet ist, seitlich zu der besagten Längsachse (X), wobei der Mittelpunkt beider besagter Durchflusswege (40d, 40c) zu einer Ebene gehört, die quer zu der besagten Längsachse (X) des besagten Verschlusskörpers (3b) liegt,
wobei die besagten drei unterschiedlichen Durchflussstrecken (10, 80, 90) Folgendes umfassen:
- eine erste Durchflussstrecke (10), wobei die besagte erste Durchflussöffnung (21) mit dem besagten ersten Durchflussweg (40a) kommunizierend positioniert ist, und die besagte vierte Durchflussöffnung (24) mit dem besagten dritten Durchflussweg (40c) kommunizierend positioniert ist;
- eine zweite Durchflussstrecke (80), wobei die besagte zweite Durchflussöffnung (22) und die besagte dritte Durchflussöffnung (23) beide mit dem besagten zweiten Durchflussweg (40b) kommunizierend positioniert sind;
- eine dritte Durchflussstrecke (90), wobei die besagte zweite Durchflussöffnung (22) mit dem besagten zweiten Durchflussweg (40b) kommunizierend positioniert ist, und die besagte vierte Durchflussöffnung (24) mit dem besagten vierten Durchflussweg (40d) kommunizierend positioniert ist.

6. Hydraulischer Verteiler (1c) nach Patentanspruch 2, **dadurch gekennzeichnet, dass** die besagten Durchflusseinstellmittel (50) fünf entlang des besagten Verschlusskörpers (3c) angeordnete Durchflusswege umfassen, und zwar im Einzelnen:
- einen ersten (50a) und einen vierten (50d) Durchflussweg, die jeweils in der Nähe eines Endes des besagten Verschlusskörpers (3c) angeordnet und entlang einer Längsrichtung (X') zueinander ausgerichtet sind, die parallel zu der Längsachse (X) verläuft, welche durch den besagten Verschlusskörper (3c) definiert wird;
- einen zweiten Durchflussweg (50b) und einen dritten Durchflussweg (50c), die beide zwischen dem besagten ersten (50a) und dem besagten vierten (50d) Durchflussweg positioniert sind, wobei der besagte zweite Durchflussweg (50b) näher an dem besagten zweiten Durchflussweg (50a) liegt und die besagten Durchflusswege auf einander entgegengesetzten Seiten der besagten Längsrichtung (X') aneinander angrenzend angeordnet sind;
- einen fünften Durchflussweg (50e), der an den besagten vierten Durchflussweg (50d) angrenzend und seitlich zu der besagten Längsachse (X) angeordnet ist,
wobei die besagten drei unterschiedlichen Durchflussstrecken (10, 80, 90) Folgendes umfassen:
- eine erste Durchflussstrecke (10), wobei die besagte erste Durchflussöffnung (21) mit dem besagten ersten Durchflussweg (50a) kommunizierend positioniert ist, und die besagte vierte Durchflussöffnung (24) mit dem besagten vierten Durchflussweg (50d) kommunizierend positioniert ist;
- eine zweite Durchflussstrecke (80), wobei die besagte zweite Durchflussöffnung (22) und die besagte dritte Durchflussöffnung (23) beide mit dem besagten dritten Durchflussweg (50c) kommunizierend positioniert sind;
- eine dritte Durchflussstrecke (90), wobei die besagte zweite Durchflussöffnung (22) mit dem besagten zweiten Durchflussweg (50b) kommunizierend positioniert ist, und die besagte vierte Durchflussöffnung (24) mit dem besagten fünften Durchflussweg (50e) kommunizierend positioniert ist.

7. Hydraulischer Verteiler (1d) nach Patentanspruch 1, **dadurch gekennzeichnet, dass** die besagten Durchflusseinstellmittel (70) sechs geformte Kerne (70a, 70b, 70c, 70d, 70e, 70f) umfassen, die aus dem besagten Verschlusskörper (3d) hervorstehen und die mit den besagten Durchflussöffnungen (20; 21, 22, 23, 24) verbunden werden können, so dass in drei Positionen zwei der besagten geformten Kerne zwei der besagten Durchflusswege schließen, um eine entsprechende Durchflussstrecke (10, 80, 90) durch das Paar (21, 24; 22, 23; 22, 24) noch offener Durchflussöffnungen (20; 21, 22, 23, 24) und die besagte Sammelkammer (4) zu definieren, welche durch den Zwischenraum zwischen der Außenfläche (3'd) des besagten Verschlusskörpers (3d) und der Innenfläche (2a) des besagten Verteilerkörpers (2) definiert ist.

8. Hydraulischer Verteiler (1d) nach Patentanspruch 7, **dadurch gekennzeichnet, dass** die besagten geformten Kerne (70a, 70b, 70c, 70d, 70e, 70f) Folgendes umfassen:
- einen ersten (70a) und einen sechsten (70f) geformten Kern, die jeweils in der Nähe eines Endes des besagten Verschlusskörpers (3d) angeordnet und entlang einer Längsrichtung (X') ausgerichtet sind, die parallel zu der Längsachse (X) verläuft, welche durch den besagten Verschlusskörper (3d) definiert wird;
- einen dritten (70c) und einen vierten (70d) geformten Kern zwischen dem besagten ersten (70a) und dem besagten sechsten (70f) geformten Kern, die parallel zueinander und bezüglich der besagten Längsrichtung (X') seitlich ausgerichtet sind;
- einen zweiten geformten Kern (70b), an den besagten ersten geformten Kern (70a) angrenzend und bezüglich der besagten Längsrichtung (X') seitlich angeordnet, wobei der Mittelpunkt beider geformter Kerne (70a, 70b) zu einer Ebene gehört, die quer zu der besagten Längsachse (X) des besagten Verschlusskörpers (3d) liegt;
- einen fünften geformten Kern (70e), an den besagten vierten geformten Kern (70d) angrenzend und bezüglich der besagten Längsrichtung (X') seitlich angeordnet, wobei der Mittelpunkt beider geformter Kerne (70e, 70d) zu u einer bezüglich der besagten Längsachse (X) des besagten Verschlusskörpers (3d) quer liegenden Ebene gehört,
wobei die besagten drei unterschiedlichen Durchflussstrecken (10, 80, 90) Folgendes umfassen:
- eine erste Durchflussstrecke (10), wobei der besagte dritte geformte Kern (70c) die besagte zweite Durchflussöffnung (22) schließt, und der besagte vierte geformten Kern (70d) die besagte dritte Durchflussöffnung (23) schließt;
- eine zweite Durchflussstrecke (80), wobei der besagte erste geformte Kern (70a) die besagte erste Durchflussöffnung (21) schließt, und der besagte sechste geformte Kern (70f) die besagte vierte Durchflussöffnung (24) schließt;
- eine ditte Durchflussstrecke (90), wobei der besagte zweite geformte Kern (70b) die besagte erste Durchflussöffnung (21) schließt, und der besagte fünfte geformte Kern (70e) die besagte dritte Durchflussöffnung (23) schließt.

9. Hydraulischer Verteiler (1; 1a; 1b; 1c; 1d) nach einem jeden der vorstehenden Patentansprüche, **dadurch gekennzeichnet, dass** der besagte Verteilerkörper (2) und der besagte Verschlusskörper (3, 3a, 3b, 3c, 3d) zylinderförmig und drehbar miteinander gekuppelt sind, um die besagten Durchflusseinstellmittel (30) in die besagten drei verschiedenen Positionen bezüglich der besagten Durchflussöffnungen (20) anzuordnen, um drei unterschiedliche Durchflussstrecken (10, 80, 90) zu definieren, wenn der besagte Verschlusskörper (3) bezüglich des besagten Verteilerkörpers (2) gedreht ist.

10. Hydrauliksystem (100), Folgendes umfassend:
- wenigstens einen Wärmeerzeuger (110) zur Erwärmung eines Wärmeträgerfluids;
- wenigstens eine Wärmetauschereinheit (120), die so konfiguriert ist, dass sie von dem besagten Wärmeträgerfluid durchströmt wird;
- eine Pumpe (130) für die Zirkulation des besagten Wärmeträgerfluids;
- eine Vielzahl von Leitungen (140) für die Zirkulation des besagten Wärmeträgerfluids,
**dadurch gekennzeichnet, dass** sie einen hydraulischen Verteiler (1; 1a; 1b; 1c; 1d) nach einem jeden der vorstehenden Patentansprüche umfasst, der in einer Position angeordnet ist, die geeignet ist, die besagte erste Durchflussstrecke (10) zu definieren, und in dem:
- die besagte erste Durchflussöffnung (21) mit der Ausgabeöffnung (130m) der besagten Zirkulationspumpe (130) verbunden ist;
- die besagte vierte Durchflussöffnung (24) mit dem Einlass (110i) der besagten Flüssigkeit in den besagten Wärmeerzeuger (110) verbunden ist;
- die besagte zweite Durchflussöffnung (22) geschlossen ist;
- die besagte dritte Durchflussöffnung (23) geschlossen und so konfiguriert ist, eine erste Verbindungsmuffe (150) zu tragen, welche die Ausgabeöffnung (110m) des besagten Wärmeerzeugers (110) in Kommunikation dem Einlass (120i) der besagten Wärmetauschereinheit (120) versetzt.

11. Hydrauliksystem (200), Folgendes umfassend:
- wenigstens eine Wärmepumpe (160) zur Veränderung der Temperatur eines Wärmeträgerfluids;
- wenigstens eine Wärmetauschereinheit (120), die so konfiguriert ist, dass sie von dem besagten Wärmeträgerfluid durchströmt wird;
- eine Pumpe (130) für die Zirkulation des besagten Wärmeträgerfluids;
- eine Vielzahl von Leitungen (140) für die Zirkulation des besagten Wärmeträgerfluids,
**dadurch gekennzeichnet, dass** sie einen hydraulischen Verteiler (1; 1a; 1b; 1c; 1d) nach einem jeden der vorstehenden Patentansprüche von 1 bis 9 umfasst, der in einer Position angeordnet ist, die geeignet ist, die besagte erste Durchflussstrecke (80) zu definieren, und in dem:
- die besagte zweite Durchflussöffnung (22) mit der Ausgabeöffnung (160m) der besagten Wärmepumpe (160) verbunden ist;
- die besagte dritte Durchflussöffnung (23) mit dem Einlass (120i) der besagten Wärmetauschereinheit (120) verbunden ist;
- die besagte vierte Durchflussöffnung (24) geschlossen ist;
- die besagte erste Durchflussöffnung (21) geschlossen ist und eine zweite Verbindungsmuffe (170) trägt, welche die Ausgabeöffnung (130m) der besagten Zirkulationspumpe (130) in Kommunikation dem Einlass (160i) der besagten Wärmepumpe (160) versetzt.

12. Hydrauliksystem (300), Folgendes umfassend:
- wenigstens eine Wärmepumpe (160) zur Veränderung der Temperatur eines Wärmeträgerfluids;
- wenigstens einen Boiler (110) zur Erhitzung des besagten, aus der besagten Wärmepumpe (160) ausfließenden Wärmeträgerfluids;
- wenigstens eine Tauschereinheit (120), die so konfiguriert ist, dass sie von dem besagten Wärmeträgerfluid durchströmt wird;
- eine Pumpe (130) für die Zirkulation des besagten Wärmeträgerfluids;
- eine Vielzahl von Leitungen (140) für die Zirkulation des besagten Wärmeträgerfluids,
**dadurch gekennzeichnet, dass** sie einen hydraulischen Verteiler (1; 1a; 1b; 1c; 1d) nach einem jeden der vorstehenden Patentansprüche von 1 bis 9 umfasst, der in einer Position angeordnet ist, die geeignet ist, die besagte dritte Durchflussstrecke (90) zu definieren, und in dem:
- die besagte zweite Durchflussöffnung (22) mit der Ausgabeöffnung (160m) der besagten Wärmepumpe (160) verbunden ist;
- die besagte vierte Durchflussöffnung (24) mit dem Einlass (110i) des besagten Wärmeerzeugers (110) verbunden ist;
- die besagte erste Durchflussöffnung (21) geschlossen und darauf konfiguriert ist, eine zweite Verbindungsmuffe (170) zu tragen, welche die Ausgabeöffnung (130m) der besagten Zirkulationspumpe (130) in Kommunikation dem Einlass (160i) der besagten Wärmepumpe (160) versetzt;
- die besagte dritte Durchflussöffnung (23) geschlossen und so konfiguriert ist, eine erste Verbindungsmuffe (150) zu tragen, welche die Ausgabeöffnung (110m) des besagten Wärmeerzeugers (110) in Kommunikation dem Einlass (120i) der besagten Wärmetauschereinheit (120) versetzt.

## Revendications

1. Distributeur hydraulique (1; 1a; 1b; 1c; 1d) comprenant:
- un corps distributeur (2) doté de bouches de débit (20) aptes à être reliées hydrauliquement aux tuyaux d'un système hydraulique;
- un corps obturateur (3, 3a, 3b, 3c, 3d) associé dans ledit corps distributeur (2) et doté de moyens (30, 40, 50, 60, 70) de sélection du débit à travers lesdites bouches de débit (20);
- au moins un élément (5) de manoeuvre dudit corps obturateur (3, 3a, 3b, 3c, 3d) apte à disposer lesdits moyens de sélection du débit (30, 40, 50, 60, 70) dans des positions différentes par rapport auxdites bouches de débit (20) pour détecter de différents parcours de débit (10, 80, 90) à travers lesdites bouches de débit (20), lesdites bouches de débit (20) étant quatre et comprenant une première bouche de débit (21), une deuxième bouche de débit (22), une troisième bouche de débit (23) et une quatrième bouche de débit (24),
**caractérisé en ce que** lesdits moyens de sélection du débit (30, 40, 50, 60, 70) sont configurés pour être disposés dans trois positions différentes par rapport auxdites bouches de débit (20) pour définir trois différents parcours de débit (10, 80, 90), chacun desquels se développe entre deux bouches de débit (21, 24; 22, 23; 22, 24) et à travers une chambre collectrice (4, 4d) se trouvant dans ledit corps distributeur (2), lesdits trois différents parcours de débit (10, 80, 90) comprenant:
- un premier parcours de débit (10) entre ladite première bouche de débit (21) et ladite quatrième bouche de débit (24);
- un deuxième parcours de débit (80) entre ladite deuxième bouche de débit (22) et ladite troisième bouche de débit (23);
- un troisième parcours de débit (90) entre ladite deuxième bouche de débit (22) et ladite quatrième bouche de débit (24).

2. Distributeur hydraulique (1; 1a; 1b; 1c) selon la revendication 1, **caractérisé en ce que** lesdits moyens de sélection du débit (30, 40, 50, 60) comprennent des voies de débit réalisées dans ledit corps obturateur (3, 3a, 3b, 3c) et communiquant avec ladite chambre collectrice (4) qui est définie intérieurement audit corps obturateur (3, 3a, 3b, 3c), lesdites voies de débit étant configurées de manière à ce que dans chacune desdites trois positions un couple desdites voies de débit résulte relié à un couple (21, 24; 22, 23; 22, 24) desdites bouches de débit (20; 21, 22, 23, 24) pour définir un parcours de débit correspondant desdits trois différentes parcours de débit (10, 80, 90).

3. Distributeur hydraulique (1) selon la revendication 2, **caractérisé en ce que** lesdits moyens de sélection du débit (60) comprennent six voies de débit disposées le long dudit corps obturateur (3), et notamment:
- une première (60a) et une sixième (60f) voies de débit chacune disposée à proximité d'une extrémité dudit corps obturateur (3) et alignée selon une direction longitudinale (X') parallèle à l'axe longitudinal (X) détecté par ledit corps obturateur (3);
- une deuxième (60b) et une quatrième (60d) voies de débit, comprises entre ladite première (60a) et ladite sixième (60f) voies de débit et alignées l'une après l'autre parallèlement et latéralement par rapport à ladite direction longitudinale (X');
- une troisième voie de débit (60c) disposée adjacente à ladite deuxième voie de débit (60b) latéralement par rapport à ladite direction longitudinale (X'), le centre des deux voies de débit (60c, 60b) appartenant à un plan transversal audit plan longitudinal (X) dudit corps obturateur (3);
- une cinquième voie de débit (60e) disposée adjacente à ladite sixième voie de débit (60f) latéralement par rapport à ladite direction longitudinale (X'), le centre des deux voies de débit (60c, 60b) appartenant à un plan transversal audit axe longitudinal (X) dudit corps obturateur (3),
lesdits trois parcours de débit différents (10, 80, 90) comprenant:
- un premier parcours de débit (10) où ladite première bouche de débit (21) est mise en communication avec ladite première voie de débit (60a) et ladite quatrième bouche de débit (24) est mise en communication avec ladite sixième voie de débit (60f);
- un deuxième parcours de débit (80) où ladite deuxième bouche de débit (22) est mise en communication avec ladite deuxième voie de débit (60b) et ladite troisième bouche de débit (23) est mise en communication avec ladite quatrième voie de débit (60d);
- un troisième parcours de débit (90) où ladite deuxième bouche de débit (22) est mise en communication avec ladite troisième voie de débit (60c) et ladite quatrième bouche de débit (24) est mise en communication avec ladite cinquième voie de débit (60e).

4. Distributeur hydraulique (1a) selon la revendication 2, **caractérisé en ce que** lesdits moyens de sélection du débit (30) comprennent trois voies de débit disposées le long dudit corps obturateur (3a), et notamment:
- une première (30a) et une troisième (30c) voies de débit chacune disposée à proximité d'une extrémité dudit corps obturateur (3a);
- une deuxième voie de débit (30b) comprise entre ladite première (30a) et ladite troisième (30c) voies de débit;
lesdits trois différents parcours de débit (10, 80, 90) comprenant:
- un premier parcours de débit (10) où ladite première bouche de débit (21) est mise en communication avec ladite première voie de débit (30a) et ladite quatrième bouche de débit (24) est mise en communication avec ladite troisième voie de débit (30c);
- un deuxième parcours de débit (80) où ladite deuxième bouche de débit (22) et ladite troisième bouche de débit (23) sont mises en communication avec ladite deuxième voie de débit (30b);
- un troisième parcours de débit (90) où ladite deuxième bouche de débit (22) est mise en communication avec ladite deuxième voie de débit (30b) et ladite quatrième bouche de débit (24) est mise en communication avec ladite troisième voie de débit (30c).

5. Distributeur hydraulique (1b) selon la revendication 2, **caractérisé en ce que** lesdits moyens de sélection du débit (40) comprennent quatre voies de débit disposées le long dudit corps obturateur (3b), et notamment:
- une première (40a) et une troisième (40c) voies de débit chacune disposée à proximité d'une extrémité dudit corps obturateur (3b) et alignées entre elles selon une direction longitudinale (X') parallèle à l'axe longitudinal (X) détecté par ledit corps obturateur (3b);
- une deuxième voie de débit (40b) comprise entre ladite première (40a) et ladite troisième (40c) voies de débit;
- une quatrième voie de débit (40d) disposée adjacente à ladite troisième voie de débit (40c) latéralement par rapport audit axe longitudinal (X), le centre des deux voies de débit (40d, 40c) appartenant à un plan transversal audit axe longitudinal (X) dudit corps obturateur (3b),
lesdits trois différents parcours de débit (10, 80, 90) comprenant:
- un premier parcours de débit (10) où ladite première bouche de débit (21) est mise en communication avec ladite première voie de débit (40a) et ladite quatrième bouche de débit (24) est mise en communication avec ladite troisième voie de débit (40c);
- un deuxième parcours de débit (80) où ladite deuxième bouche de débit (22) et ladite troisième bouche de débit (23) sont mises en communication avec ladite deuxième voie de débit (40b);
- un troisième parcours de débit (90) où ladite deuxième bouche de débit (22) est mise en communication avec ladite deuxième voie de débit (40b) et ladite quatrième bouche de débit (24) est mise en communication avec ladite quatrième voie de débit (40d).

6. Distributeur hydraulique (1c) selon la revendication 2, **caractérisé en ce que** lesdits moyens de sélection du débit (50) comprennent cinq voies de débit disposées le long dudit corps obturateur (3c), et notamment:
- une première (50a) et une quatrième (50d) voies de débit chacune disposée à proximité d'une extrémité dudit corps obturateur (3c) et alignées entre elles selon une direction longitudinale (X') parallèle à l'axe longitudinal (X) détecté par ledit corps obturateur (3c);
- une deuxième voie de débit (50b) et une troisième voie de débit (50c) qui sont toutes les deux comprises entre ladite première (50a) et ladite quatrième (50d) voies de débit, ladite deuxième voie de débit (50b) étant plus proche de ladite première voie de débit (50a), lesdites voies de débit étant disposées adjacentes entre elles et étant disposées sur des côtés opposés de ladite direction longitudinale (X');
- une cinquième voie de débit (50e) disposée adjacente à ladite quatrième voie de débit (50d) latéralement par rapport audit axe longitudinal (X),
lesdits trois différents parcours de débit (10, 80, 90) comprenant:
- un premier parcours de débit (10) où ladite première bouche de débit (21) est mise en communication avec ladite première voie de débit (50a) et ladite quatrième bouche de débit (24) est mise en communication avec ladite quatrième voie de débit (50d);
- un deuxième parcours de débit (80) où ladite deuxième bouche de débit (22) et ladite troisième bouche de débit (23) sont mises en communication avec ladite troisième voie de débit (50c);
- un troisième parcours de débit (90) où ladite deuxième bouche de débit (22) est mise en communication avec ladite deuxième voie de débit (50b) et ladite quatrième bouche de débit (24) est mise en communication avec ladite cinquième voie de débit (50e).

7. Distributeur hydraulique (1d) selon la revendication 1, **caractérisé en que** lesdits moyens de sélection du débit (70) comprennent six noyaux galbés (70a, 70b, 70c, 70d, 70e, 70f) saillant dudit corps obturateur (3d) et qui peuvent être reliés avec lesdites bouches de débit (20; 21, 22, 23, 24) de façon à ce que dans chacune desdites trois positions deux desdits noyaux galbés ferment deux desdites voies de débit pour définir un parcours de débit correspondant (10, 80, 90) à travers le couple (21, 24; 22, 23; 22, 24) de bouches de débit (20; 21, 22, 23, 24) restées ouvertes et ladite chambre collectrice (4) qui est définie par l'espace compris entre la surface extérieure (3'd) dudit corps obturateur (3d) et la surface intérieure (2a) dudit corps distributeur (2).

8. Distributeur hydraulique (1d) selon la revendication 7, **caractérisé en ce que** lesdits noyaux galbés (70a, 70b, 70c, 70d, 70e, 70f) comprennent:
- un premier (70a) et un sixième (70f) noyaux galbés chacun disposé à proximité d'une extrémité dudit corps obturateur (3d) et alignés selon une direction longitudinale (X') parallèle à l'axe longitudinale (X) détecté par ledit corps obturateur (3d);
- un troisième (70c) et un quatrième (70d) noyaux galbés compris entre ledit premier (70a) et ledit sixième (70f) noyaux galbés et alignés entre eux parallèlement et latéralement par rapport à ladite direction longitudinale (X');
- un deuxième noyau galbé (70b) disposé adjacent audit premier noyau galbé (70a) latéralement par rapport à ladite direction longitudinale (X'), le centre des deux noyaux galbés (70a, 70b) appartenant à un plan transversal audit axe longitudinal (X) dudit corps obturateur (3d);
- un cinquième noyau galbé (70e) disposé adjacent audit quatrième noyau galbé (70d) latéralement par rapport à ladite direction longitudinale (X'), le centre des deux noyaux galbés (70e, 70d) appartenant à un plan transversal par rapport audit axe longitudinal (X) dudit corps obturateur (3d),
lesdits trois différents parcours de débit (10, 80, 90) comprenant:
- un premier parcours de débit (10) où ledit troisième noyau galbé (70c) ferme ladite deuxième bouche de débit (22) et ledit quatrième noyau galbé (70d) ferme ladite troisième bouche de débit (23);
- un deuxième parcours de débit (80) où ledit premier noyau galbé (70a) ferme ladite première bouche de débit (21) et ledit sixième noyau galbé (70f) ferme ladite quatrième bouche de débit (24);
- un troisième parcours de débit (90) où ledit deuxième noyau galbé (70b) ferme ladite première bouche de débit (21) et ledit cinquième noyau galbé (70e) ferme ladite troisième bouche de débit (23).

9. Distributeur hydraulique (1; 1a; 1b; 1c; 1d) selon l'une quelconque des revendications précédentes, **caractérisé en ce que** ledit corps distributeur (2) et ledit corps obturateur (3, 3a, 3b, 3c, 3d) présentent une forme cylindrique et sont accouplés de manière pivotante entre eux pour disposer lesdits moyens de sélection du débit (30) dans lesdites trois positions différentes par rapport auxdites bouches de débit (20) aptes à définir lesdits trois différents parcours de débit (10, 80, 90) quand ledit corps obturateur (3) est tourné par rapport audit corps distributeur (2).

10. Système hydraulique (100) comprenant:
- au moins un générateur de chaleur (110) pour le chauffage d'un fluide caloporteur;
- au moins un groupe d'échange thermique (120) configuré pour être traversé par ledit fluide caloporteur;
- une pompe (130) de circulation dudit fluide caloporteur;
- une pluralité de tuyaux (140) pour la circulation dudit fluide caloporteur,
**caractérisé en ce qu'**il comprend un distributeur hydraulique (1; 1a; 1b; 1c; 1d) selon l'une quelconque des revendications précédentes disposé dans une position apte à définir ledit premier parcours de débit (10) et ayant:
- ladite première bouche de débit (21) reliée à la bouche de refoulement (130m) de ladite pompe de circulation (130);
- ladite quatrième bouche de débit (24) reliée à l'entrée (110i) dudit fluide dans ledit générateur de chaleur (110);
- ladite deuxième bouche de débit (22) fermée;
- ladite troisième bouche de débit (23) fermée et configurée pour supporter un premier manchon de raccordement (150) qui met en communication la bouche de refoulement (110m) dudit générateur de chaleur (110) avec l'entrée (120i) dudit groupe d'échange thermique (120).

11. Système hydraulique (200) comprenant:
- au moins une pompe de chaleur (160) pour la variation de la température d'un fluide caloporteur;
- au moins un groupe d'échange thermique (120) configuré pour être traversé par ledit fluide caloporteur;
- une pompe (130) de circulation dudit fluide caloporteur;
- une pluralité de tuyaux (140) pour la circulation dudit fluide caloporteur,
**caractérisé en ce qu'**il comprend un distributeur hydraulique (1; 1a; 1b; 1c; 1d) selon l'une quelconque des revendications précédentes de 1 à 9, disposé dans une position apte à définir ledit deuxième parcours de débit (80) et ayant:
- ladite deuxième bouche de débit (22) reliée à la bouche de refoulement (160m) de ladite pompe de chaleur (160);
- ladite troisième bouche de débit (23) reliée à l'entrée (120i) dudit groupe d'échange thermique (120);
- ladite quatrième bouche de débit (24) fermée;
- ladite première bouche de débit (21) fermée qui supporte un deuxième manchon de raccordement (170) qui met en communication la bouche de refoulement (130m) de ladite pompe de circulation (130) avec l'entrée (160i) de ladite pompe de chaleur (160).

12. Système hydraulique (300) comprenant:
- au moins une pompe de chaleur (160) pour la variation de la température d'un fluide caloporteur;
- au moins une chaudière (110) pour le chauffage dudit fluide caloporteur sortant de ladite pompe de chaleur (160);
- au moins un groupe d'échange thermique (120) configuré pour être traversé par ledit fluide caloporteur;
- une pompe (130) de circulation dudit fluide caloporteur;
- une pluralité de tuyaux (140) pour la circulation dudit fluide caloporteur,
**caractérisée en ce qu'**il comprend un distributeur hydraulique (1; 1a; 1b; 1c; 1d) selon l'une quelconque des revendications précédentes de 1 à 9, disposé dans une position apte à définir ledit troisième parcours de débit (90) et ayant:
- ladite deuxième bouche de débit (22) reliée à la bouche de refoulement (160m) de ladite pompe de chaleur (160);
- ladite quatrième bouche de débit (24) reliée à l'entrée (110i) dudit générateur de chaleur (110);
- ladite première bouche de débit (21) fermée et configurée pour supporter un deuxième manchon de raccordement (170) qui met en communication la bouche de refoulement (130m) de ladite pompe de circulation (130) avec l'entrée (160i) de ladite pompe de chaleur (160);
- ladite troisième bouche de débit (23) fermée et configurée pour supporter un premier manchon de raccordement (150) qui met en communication la bouche de refoulement (110m) dudit générateur de chaleur (110) avec l'entrée (120i) dudit groupe d'échange thermique (120).
